Europäisches Patentamt

European Patent Office

Office européen des brevets

(11) Publication number: **0 032 446**
**B1**

(12) **EUROPEAN PATENT SPECIFICATION**

(45) Date of publication of patent specification: **28.08.85**

(51) Int. Cl.⁴: **G 03 B 27/64,** G 03 G 15/00

(21) Application number: **81300104.7**

(22) Date of filing: **09.01.81**

(54) A document handling apparatus.

(30) Priority: **10.01.80 US 111051**
**10.01.80 US 111058**
**10.01.80 US 111059**
**10.01.80 US 111060**
**10.01.80 US 111061**
**10.01.80 US 111063**

(43) Date of publication of application:
**22.07.81 Bulletin 81/29**

(45) Publication of the grant of the patent:
**28.08.85 Bulletin 85/35**

(84) Designated Contracting States:
**DE FR GB IT**

(56) References cited:
**EP-A-0 032 796**
**US-A-3 677 643**
**US-A-3 861 669**
**US-A-4 043 665**
**US-A-4 047 812**
**US-A-4 179 215**

(73) Proprietor: **XEROX CORPORATION**
**Xerox Square - 020**
**Rochester New York 14644 (US)**

(72) Inventor: **Silverberg, Morton**
**23 Old Pond Road**
**Rochester New York (US)**
Inventor: **Spehrley, Charles W.**
**21 Terrace View**
**Lebanon New Hampshire 03766 (US)**
Inventor: **Thettu, Raghulina R.**
**795 Hightower Way**
**Webster New York 14580 (US)**

(74) Representative: **Weatherald, Keith Baynes et al**
**European Patent Attorney Rank Xerox Limited**
**Patent Department 338 Euston Road**
**London NW1 3BH (GB)**

Courier Press, Leamington Spa, England.

## Description

This invention relates to a document handling apparatus for transporting documents with a vacuum belt to an imaging station of a copier, where the documents may be imaged against a light-reflective document imaging surface on one side of said belt, and in which the documents are attracted to the one side of said belt by suction applied from a vacuum manifold at the other side of said belt through multiple vacuum passages extending through the belt and opening on the one side.

For the faster xerographic and other document copiers now in commercial use, it is increasingly desirable to provide for automatic handling of the individual original documents being copied in order to utilize those higher speed copying capabilities. However, such documents can vary widely in sheet size, weight, thickness, material, condition, humidity, age, and value. The documents may have curls, wrinkles, tears, "dog-ears", cut-outs, overlays, paste-ups, tape, staples, adhesive areas, or other irregularities. Yet it is desirable to be able to copy semi-automatically or automatically, a set of documents with a mixture of sizes, types, and conditions, without document jams or document damage. Further, it is desirable to handle such documents with a relatively compact and inexpensive document handling system. Preferably the document handling system is one which may be positionable over an existing or conventional external transparent copying platen (window) of a copier, and which can utilize the same existing or conventional optics system. That is, it is desirable that the automatic document handling system be readily removable from the platen area by the copier operator whenever desired to allow for conventional manual copying of documents, such as books, on the same copying platen.

One of the most important, and difficult to achieve, requirements for automatic or semi-automatic document handling is the accurate and reliable, but safe, transporting and registration of the original document at the proper position for copying. The document should normally be precisely center registered or corner registered (depending on the copier) over the copier platen. This registration accuracy is desirably consistent within less than a millimeter. If the document is not properly registered, or slips after registration, undesirable dark borders and/or edge shadow images may appear on the ensuing copy, and/or information near edges of the original documents may be lost, i.e., imaged beyond the edges of the copy sheet, or not imaged.

Known document handling systems include various document transports which move the original documents over the platen. This may be a single or multiple belt transport which utilizes frictional or electrostatic forces. However, it is known to be advantageous to have positive vacuum detention or gripping of the document against the belt by vacuum apertures in the belt to avoid uncontrolled slippage or skewing of the document relative to the transport belt, as disclosed in US—A—4,043,665 and US—A—4,008,956. Other vacuum belt document transport publications include "Research Disclosure" Publications No. 16659, Feb. 1978; No. 17427, Oct. 1978; and No. 17809, Feb. 1979, published by Industrial Opportunities, Ltd., Havant, Hampshire, U.K.

It is also known to apply vacuum holding to a document for copying through a plate or cover rather than through a moving transport belt, as disclosed in GB—A—1 532 880, corresponding to JP—A—53-52436, and US—A—3,245,291.

While not designed for document handling for a copier, with appropriate optical characteristics, etc., it is known to provide vacuum sheet transports with ribs extending substantially above the vacuum apertured surface to distribute the suction under the sheet to be transported. Examples are shown in US—A—3,123,354, US—A—3,452,982, US—A—3,477,558 and US—A—3,583,614. Multiple belt copy sheet transports with suction applied in the spaces between the belts are also known, e.g., US—A—3,281,144 and US—A—3,743,403.

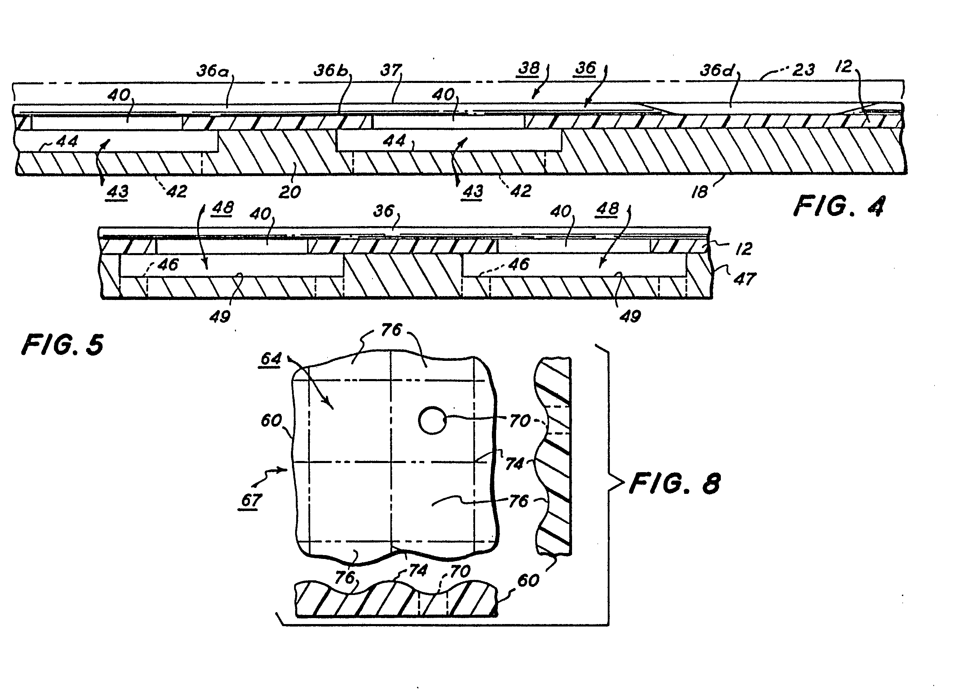

It is also known to register the original document with roller nips or retractable or fixed registration gates in various ways. One way is to pre-register the document to a vacuum belt with pre-registration fingers or rollers and move the document on the belt a known distance over the platen into registration without slippage, as disclosed in the above-cited patents. Another way is to provide retractable registration fingers (or a fixed gate or stop edge) aligned with one edge of the platen and engaging a frictional (non-vacuum) belt to normally stop an edge of the document being transported by the belt at the registration position overlying the platen, as disclosed in US—A—3,910,570, or various of the earlier references cited in US—A—4,043,665. In such systems the belt must slip relative to the document without damaging it once the document has been stopped, at least briefly until the belt is stopped. US—A—3,910,570 also discloses rollers 32 engaging the inside of the belt 17 between each pair of the gate fingers 29 to form localized bubbles or protrusions of the belt. (See Fig. 4 and Column 4, lines 43 et. al., for example). US—A—3,863,912 discloses a document belt with parallel ridges extending around the belt in its direction of movement. It is known that the document may be either driven forward into a downstream platen edge registration gate or reversed over the platen to back the document up against an upstream platen edge registration gate. It is also known to register documents without such gates or other stops by sensing the passage of the lead or trail edge of the document with a photo-detector as it moves toward or past registration and driving the document belt forward or backward for a brief fixed distance or time thereafter without slippage of the document thereon, provided the documents are not skewed.

In these above-described systems where the document is on a moving belt transport but must be registered at a precise location by a registration gate, to the belt or to a fixed position, there is a serious difficulty in avoiding the escape or slippage of the document from between the tips of the registration gate fingers and the moving belt, particularly for certain document weights and conditions (e.g., curled edges). Besides loss of registration, such slippage can cause serious damage to the original documents. Also, if a document is stopped by only one of two or more spaced fingers it can become skewed. Besides mis-registration image loss and edge or background effects this skewing can cause serious problems in the further transporting of the document.

If the document transport comprises a plurality of separate narrow document belts, the registration fingers can be extended up between the belts to ensure capture of the document edge. However, as noted in the above-cited US—A—3 910 570, such separate belts can produce background stripes on the copies from the images or shadows of the belt edges of which are behind and adjacent the document. This is aggravated by dirt contamination of the belt edges.

Such "show-through" and/or "show-around" background printout on the copies, respectively, is a general problem with various document transport belts. That is, when a document is imaged for copying against a belt, any optically-significant irregularities in the belt surface can be copied also, to print-out on the copies as undesirable dark background areas. To avoid this problem, a single smooth, continuous and optically uniform light-reflective document belt surface, larger than the largest document to be copied thereon, is preferred. Any edges, transitions or vacuum apertures in the belt in the exposure area can produce shadows which "showthrough" translucent documents being copied, and/or "showaround" any mis-registered or undersized documents. Normal dirt contamination (darkening) of belt surface irregularities aggravates these background problems.

Show-around problems and registration criticality can be reduced by slightly magnifying the document image to "overfill" the copy sheet area, or by registering a document edge beyond the imaged area. However, both approaches sacrifice the non-imaged information near the edges of the document, and that loss is additive for copies of copies. Further, when reduction copying of a document is done (i.e., less than 1:1 optical reproduction), or where the document is smaller than the copy sheets, the image reproduced on the copy will include substantial areas of the belt which are within the now-expanded original image area and thus beyond (outside the area of) the document. Thus, the potential "show-around" problem area is more extensive.

One partial approach to the "show around" problem is to provide no suction apertures in the vacuum belt in narrow bands corresponding to the normal edge positions of the documents as disclosed in US—A—4,047,812. However, as noted there, this results in no suction forces being applied to those areas of the document. Also, since the aperture pattern is otherwise continuous, the apertures are still visible adjacent the lead and trail edges of the document. This patent, and the above-cited US—A—4 043 665, approach the "show-through" problem by using small diameter suction apertures. However, as noted there, very fine holes are subjected to clogging by paper lint and other contamination. They also provide increased air resistance and a smaller effective vacuum area, thereby increasing the power requirements of the suction source to maintain desired vacuum acquisition and holding forces on the document. Another approach is to use a transparent vacuum belt with a light reflector behind the belt, as disclosed in US—A—4,120,579. However, scratches or dust on the belt can cause background print-out. US—A—3,677,643 teaches a vacuum document exposure drum with vacuum orifices recessed within reflective conical recesses to prevent orifice printout in an overlay (contact print) copier.

The present invention is characterised by said openings of the suction passages being limited to areas of the one side of said belt coverable by the smallest document to be imaged thereagainst, to avoid show-around exposure of said passages during said document imaging, said one side of said belt having a multiplicity of gas-flow channels recessed slightly below said light-reflective document imaging surface thereof, said channels having sufficiently gently sloping walls to avoid imaged edge shadows thereof at said imaging station, and light-reflective characteristics substantially equal to or better than said document imaging surface to avoid show-around imaging of said channels, said openings of the gas-flow passage at the one side of said belt being recessed within the channels substantially spaced below said document imaging surface, with the channels pneumatically connecting with said suction passages and extending unapertured outwardly from and beyond the suction passages over said document imaging surface of said belt, said vacuum apertures being sufficiently large to provide a low impedance (relatively unrestricted) to airflow therethrough into the suction channels, to provide airflow along said channels and into said passages from the direction of the edges of a document, thereby to generate holddown forces on the document whereby different sizes of documents may be retained by suction on said document imaging surface, without either said suction passages or channels being substantially imagable.

The present invention is not limited to any particular type of document illumination system, and is applicable to, for example, either movable lamp stationary document copying, or movable document, stationary optics copying (slit scanning). However, it is particularly suitable for full frame flash illumination systems with light directed and reflected to the document and document belt from all angles, since this assists in eliminating edge shadows. One such illumination system is disclosed in EP—A—16 555.

The present invention overcomes or minimizes the above-discussed problems in an original document handling apparatus for moving successive individual document sheets on the surface of a movable belt into a registered position for copying at a copier imaging station, by providing a document transport belt with suction grooves which are so constructed as to be invisible to the copier optics, yet which also provide improved document suction hold-down, and which minimize both show-through and show-around.

In the exemplary document handling apparatus disclosed hereinbelow, in which documents are moved with a suction belt to an imaging station of a copier, and where the documents are imaged on a light-reflective principal document imaging surface on one side of said belt, and in which the documents are held against the one side by pressure differential applied by suction manifold at the other side of said belt, through multiple air flow passages extending through the belt and opening on to the one side which has a multiplicity of shallow air flow channels recessed below said principal light-reflective document imaging surface. These channels have sufficiently gently sloping walls, and light-reflective characteristics substantially equal to or better than said document imaging surface, to avoid imaged shadows thereof at said imaging station. These channels are pneumatically connected to the suction apertures, but extend outwardly from and beyond the apertures over said document imaging surface of said belt. The openings of said suction passages are disclosed as limited to areas of the one side of said belt coverable by the smallest document to be imaged thereagainst, to avoid show-around exposure of said apertures during document imaging. The openings in the one side of said belt are recessed within the air flow channels so that said openings are substantially spaced below said document imaging surface. Also, said air flow channels are sufficiently narrow to prevent deformation of flimsy documents at said openings, yet the openings are sufficiently large to provide a low impedance to air flow therethrough relative to the air flow channels, so that document hold-down force-generating air-flows can be drawn from the direction of the edge of the document through said channels under the document and into the suction openings generating suction in said channels between said document edge and said apertures, and so that neither the channels nor the apertures are substantially imagable when a document is imaged on said document imaging surface at said imaging station.

Additional disclosed features include the provision of a minimum area of said suction openings greater than the minimum cross-sectional areas of their respective air flow channels to which they are pneumatically connected, so that the predominant pressure drop resulting from said air flow will occur in said channels under a document rather than in said apertures. The channels may extend beyond at least one dimension of the largest documents to be imaged on said belt to provide pneumatic edge hold-down forces.

In order that the invention may be more readily understood, reference will now be made to the accompanying drawings, in which:—

Fig. 1 is a cross-sectional side view of an exemplary document handling apparatus in accordance with the present invention;

Fig. 2 is a bottom view of the apparatus of Fig. 1;

Fig. 3 is an enlarged partial cross-sectional view taken along the line 3—3 of Fig. 2;

Fig. 4 is an enlarged partial cross-sectional view taken along the line 4—4 of Fig. 2;

Fig. 5 is an alternative embodiment of the portion of the apparatus illustrated in Fig. 4;

Fig. 6 is a bottom view of an alternative document belt embodiment of the document handling apparatus of Figs. 1—4;

Fig. 7 is an enlarged partial cross-sectional view taken along the lines 7—7 in Fig. 6; and

Fig. 8 is an enlarged central portion of Fig. 6, and its cross-sectional side view on two orthogonal axes.

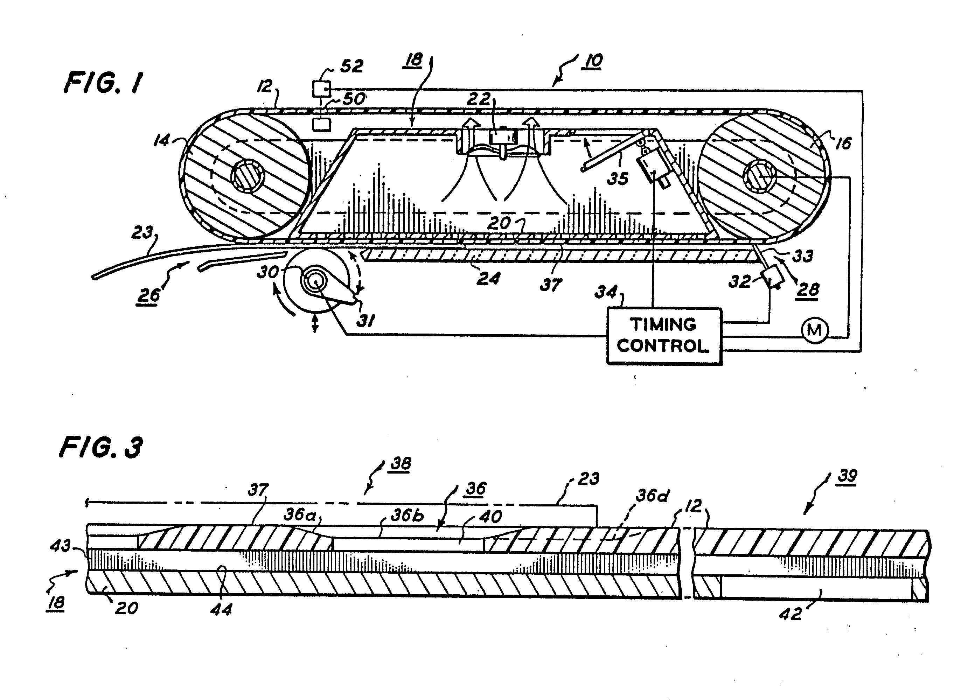

Referring first to Figs. 1—4, they illustrate one example of the present invention. However, it will be appreciated that the invention may have many other different structures or orientations, and combinations with various xerographic or other copying systems. Figs. 5—8 and the above-cited and other patents provide examples of further or alternative apparatus.

Referring first to Fig. 1, there is shown an exemplary document handling apparatus 10. This drawing is not to scale, as it is transversely foreshortened for drawing clarity. That is, the document belt 12 illustrated would be preferably relatively more elongated between its end support and drive rollers 14 and 16. Further, while a semi-automatic document handling apparatus for a copier is illustrated here for simplicity, it will be appreciated that the invention is fully applicable to various recirculating document handling apparatus for pre-collation copying.

In the exemplary apparatus 10 of Fig. 1 there is illustrated a suction manifold 18 with an aperture plate 20 for applying a suction to the inside of an apertured document belt 12, which suction is provided by a pump 22. The document belt 12 and the plate 20 are mounted so that a document 23 may be transported on the document belt 12 closely and evenly spaced (e.g., approximately 0.5 mm) above a transparent platen 24 of the copier, at which the document to be copied is within the depth of focus of the optical system of the copier, through the platen 24.

Documents 23 here are inserted into the belt transport system at a document input area or loading station 26 near the upstream end of the belt 12, manually or automatically. The documents may then be ejected from an output area 28 at the downstream end of the belt and the platen. Alternatively, the belt drive may be reversed to eject the document from the loading station 26. It will be appreciated that various sheet guides or baffles, and/or idler rollers engaging the belt 12, as shown at the input area 26, may be utilized to assist the document path at either the input or output areas. Upstream pre-registration gates or rollers may also be provided.

Referring now to the registration of the documents 23 at the desired copying position on the platen 24, there are illustrated in Fig. 1 two registration gate systems; an upstream registration gate 30 and a downstream registration gate 32. These gates 30 and 32 have respective sets of registration fingers 31 and 33 which are movable in and out of the path of the documents for their registration, i.e., toward and away from cooperative engagement with the belt 12.

As indicated, there are various types of registration systems for successfully registering individual document sheets on the surface of the belt 12 in the registration position for copying at tme copier imaging or exposure station. For example only one, or both, or neither, of the registration gates 30 and 32 illustrated here may be utilized, and these gates may have different structures or be utilized in different manners.

Both of the illustrated registration gates 30 and 32 as well as the belt drive motor "M" may be conventionally controlled by a timing control 34. Preferably the control 34 is incorporated in a general conventional central copier microprocessor control with programming. Some examples are disclosed in US—A—4,062,061, US—A—4,076,408, US—A—4,078,787, US—A—4,099,150, US—A—4,125,325 and US—A—4,144,550. However, timing and control may be provided by any desired conventional logic, such as commercial timing circuits, or multiple lobe cams on a timing shaft, or any other suitable timing system which provides the desired sequence of operations.

The present invention is not limited to a particular registration system but rather relates primarily to the construction and operation of the document belt 12 to be described below. However, some examples of the operation of possible registration systems will be briefly discussed. In one mode, the upstream registration gate 30 pre-registers the document to a selected fixed position on the belt 12 upstream of the platen and then the document is driven for a known fixed distance from that gate 30 downstream over the platen without slippage. Copying takes place after this known advancement into the registration position, as described in the above-cited US—A—4,043,665. Note that in such a system the downstream registration gate 32 is not required. However, if desired, it may be additionally provided for final or re-registration.

Alternatively, only the downstream registration gate 32 may be utilized, i.e., the document would not be pre-registered. In this case, the document is driven by the belt 12 over the platen until the lead edge of the document contacts the raised registration fingers 33, which are positioned directly at the downstream (beveled) edge of the platen 24. Relative frictional slippage is then provided between the belt 12 and the document so that the document may deskew and fully align against all the registration fingers 33. For this, the document belt is driven for at least a brief period after registration is achieved by the downstream registration gate 32.

For this registration mode there is additionally illustrated here an intermittently-operable suction control valve 35. This may be a solenoid-actuated flapper valve controlled by the timing control 34, as shown, in coordination with one or both registration systems. Opening of the valve 35 quickly reduces the suction in the manifold 18, and thereby reduces the suction applied to the document through the belt 12, to allow slippage between the document and the belt during registration. Closing of the valve 35 quickly restores the suction. This valve operation may also be done during initial loading or pre-registration of the document onto the belt 12 at the input area 26. If desired, the area to which such a controlled suction may be applied may be a separate portion of a belt, i.e., a separate suction manifold chamber or section.

The downstream registration gate 32 is conventionally opened by its solenoid or other actuator linearly pulling the registration fingers 33 out of the path of the document. After the document is copied it may then be ejected in either direction from the platen by the belt drive. The upstream registration gate 30 conventionally operates, as shown by its dashed line with arrows, by being driven in and out of the document path, with a clutch drive, cam or solenoid.

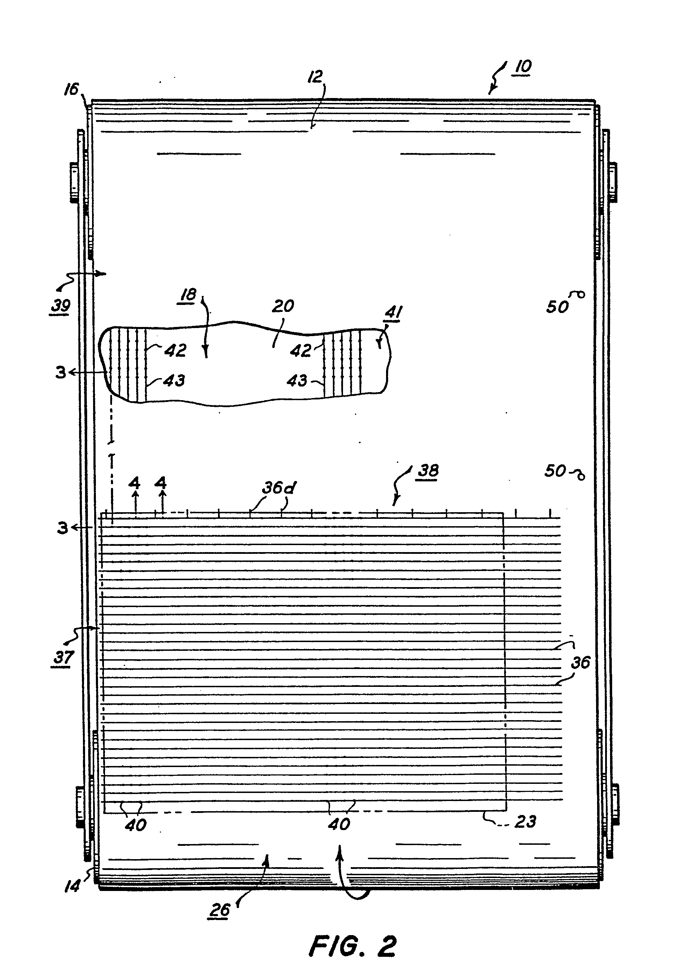

Referring now to Figs. 2, 3 and 4, the configuration of the belt 12 will be described, with particular reference to the enlarged cross-sectional view of Fig. 3.

As shown in Fig. 2, the belt 12 has a plurality of narrow, elongated, permanent shallow grooves 36 in minor, spaced, document imaging areas thereof These grooves 36 here extend linearly transverse to the direction of movement of the belt. They are below the planar document transporting outer surface 37 of the belt. The grooves 36 are each narrower in width (the transverse dimension in Fig. 3) than the spacing across the intervening belt surface 37 between the grooves, and are not connected together, so as to provide pneumatic separation. All of the grooves 36 have smooth and gently sloped side walls 36a and are so configured to avoid any reproducible shadows at the copier imaging station. That is, the side walls 36a are both at a gentle acute angle, preferably less than approximately 20°, from the document transporting surface 37 so that there are no "edge shadows" from the sides of the grooves. With improved optical cavity illumination the groove wall slope may be somewhat greater than 20°. There are no sharp transitions or edges. The base 36b is preferably not greatly more than approximately one millimeter in depth below the surface 37, and preferably not greatly less than approximately 0.2 millimeters deep. Thus, the preferred grooves are effectively shallow and gentle slight undulations in the belt surface. The groove surfaces preferably have substantially the same light-reflective characteristics as the surface 37. The entire groove 36, i.e., both sides 36a and the bottom or base 36b, are fully and uniformly illuminated by the illumination system of the copier. Thus, both show-through and show-around copy defects are normally avoided, and substantially entirely eliminated for conventional documents.

The width of the grooves 36, preferably less than approximately 5 millimeters, is sufficiently narrow such that the beam strength of the document 23 prevents even a thin document from sagging or being pulled into contact with the base 36b of the grooves 36, even when suction is applied to the grooves 36. Some slight corrugation of light-weight sheets partially into the grooves may be desirable, providing there is no loss of optical resolution or other image distortion. This increases the stiffness or beam strength of these thinner sheets, particularly against bending on the orthogonal axis, and may assist their registration. Note that the grooves do not need to be provided across the full width of the belt. They may extend somewhat less than the width of the widest document to be transported or alternatively, somewhat more (note Fig. 2).

The lateral or transverse alignment of the belt 12 along the axes of the rollers 14 and 16, and its drive, may be accomplished by use of sprockets or "V" grooves on the rollers 14 and 16 mating with corresponding sprocket holes or grooves along at least one edge of the belt 12. Alternative alignment or realignment systems or guides of the belt may be utilized.

A variety of materials and methods of fabrication may be utilized for the belt 12. Preferably it is fabricated from an elastomeric low surface energy flexible plastics or rubber material, with sufficient conductivity to avoid static electricity build-up. The overall belt thickness may be approximately 0.4 to 1.5 millimeters. The belt with the grooves 36 integrally formed therein may be continuously fabricated and then the appropriate belt length cut off and seamed to form an endless loop. Alternatively, the grooves can be machined, or the entire belt with grooves monolithically formed by casting. If desired, the belt can have two or more layers of different material, such as an inelastic polyester substrate with an overcoating of white (light-reflective) higher friction elastomeric or other material providing the document contacting outer surface 37.

The belt 12 and its suction system provide retention of the document on the belt in a manner which avoids show-through or show-around images of the air flow openings in the belt 12 from being reproduced on the copy sheets. However, it also provides improved, lower energy consumption, suction retention of the copy sheets. That is, both desired features are enhanced with this system rather than one feature being sacrificed for the other. As shown in Fig. 2, multiple air flow openings 40 are provided only in the base area 36b of the grooves 36. That is, the suction openings in the belt are wide at the surface of the belt, narrow closer to where they meet the openings 40.

Placing the suction openings 40 in the valleys or bottoms 36b of the grooves moves them substantially out of contact with the document being transported. This serves to prevent show-through as long as the document is reasonably opaque. However, there is an equally important purpose. Since the document does not directly overlie and block the suction openings, the grooves 36 distribute suction from the openings over the area of the grooves under the document and towards the edges thereof, as will be further explained. Further, each groove is a separate, independent, suction area.

Preferably, the suction openings 40 are located in discrete spaced groups 38 around the belt circumference to which the documents are registered, so that they will always be fully covered by the documents during imaging, to avoid show-around imaging of the openings. For example, by selection of the length of the belt, and of the size and spacing of the groups or patterns of holes along the belt, two, three, or more discrete apertured and grooved areas 38 may be provided for the number of documents to be fed per belt revolution. For example, assuming a 300 mm platen in the direction of belt motion, three 370 mm pitches (spaced port patterns) 38 can be provided with a belt 1.11 m in the circumference. That is, three groups of openings could be provided equidistantly around the belt.

Only the area under the lead edge of the document to be captured need be apertured. Thus, for circumferential grooves, the length of each group in the direction of belt motion could be on the order of only 5 centimeters, and sixteen holes approximately 1.6 millimeters in diameter and approximately 3 millimeters apart, center-to-center, would be appropriate. In the exemplary transverse groove system of Fig. 2 there are only ten openings 40 in each groove, with one group of five openings being near the registration side, and the other group of five openings being spaced 50 mm away, approximately in the middle of the belt, to underlie the narrowest document to be handled, thus forming two circumferential bands of apertures. However, in the areas 38 only twenty-five transverse grooves are apertured, so that each area 38 extends over only 168 mm of the circumferential length of the belt, which has a total circumference of 1.035 m.

By selecting the pitch (spacing) and size of the hole and groove patterns 38 so that an unapertured length of belt 39 is available which is longer than the platen size, an unapertured and ungrooved area of belt may be automatically positioned over the platen during manual copying. It will provide a continuous, completely smooth and unapertured planar background for any size of copy being manually copied, overlying the entire platen, as will be further described herein.

The "overhang" of the belt, i.e., its extension beyond the upstream and downstream edges of the platen, may be utilized for the document input area 26 and output area 28. This additional document transporting by the same system before and after copying may be desirably utilized to integrate this system with input sheet feeders and output stackers or other transports. For example, with the above-described exemplary three pitch belt and 300 mm platen and 38 mm diameter pulleys, there is provided an approximately 90—100 mm overhang or extension of the belt at each side of the platen.

As a preferred example, as in Figs. 2—4, for a platen capable of full frame imaging of large standard documents a 1.035 m long endless belt 12 between two 254 mm diameter pulleys may have two spaced imaging areas, i.e., two patterned belt surface areas 38, with, for example, each pattern 38 having approximately 25 parallel suction grooves 36 extending linearly approximately 366 mm across the belt surface 37 transverse to the direction of belt motion and spaced approximately 7 mm apart, center line to center line, but with suction apertures in only those two minor areas of the total groove lengths which will be covered by the smallest document to be transported. The apertures 40 through the belt may be approximately 2.8 mm in diameter cylinders perpendicular to the belt surface. They may be evenly spaced apart along the bottom of the grooves by approximately 9.4 mm within their above-described two bands. The grooves themselves may be approximately 4.6 mm wide at the belt imaging surface, and approximately 0.2 mm deep. The total belt thickness may be only approximately 0.45 mm. The shape of the grooves may be smoothly cylindrical to a much larger radius, e.g., approximately 13.3 mm, to avoid any angular transitions which could cause edge shadows. This also ensures, to the same end, a desired small slope angle of less than 20 degrees, and preferably less than 10 degrees, between the side walls of the grooves and the imaging surface. This low angle of incidence is an important feature. The transition lines between the edges of the grooves and the imaging surface are also preferably rounded or smoothed to blend in smoothly.

A relatively low power and low pressure suction system 22 may be utilized. For example, a manifold suction level of not substantially greater than 25 millimeters of water, and an air flow of somewhat more than only $1.8 \times 10^{-3}$ cubic meters per second, could be sufficient.

With the above-described system of discrete hole groups, which the document fully overlies, it will be appreciated that the document is registered to a specific belt position at the document input area 26. This may be accomplished by holding the document at the pre-registration gate 30 (or other pre-registration gate) until a belt cursor 50, which may be holes or other indicia along the belt edge, actuates a photo-optical or other sensor 52 connected to the timing control 34. The document is thereby released at the appropriate time for the lead edge of the document to overlie the hole pattern and the document is then fed by the belt without slippage over the platen into registration. No over-platen registration is required. The same or other fiduciary marks 50 and sensors 52 may be used to stop the belt at the registration position (with the document positioned over the platen).

With the above described registration system, the document is registered against the belt completely overlying one of the discrete suction areas 38 of the belt 12. The belt is then driven, by a conventional servo motor "M", stepper motor, timed drive braked motor, geneva drive, or the like, connecting with, or integral with, belt drive roller 16, or 14. The apertured area 38 of the belt is thus driven from the initial loading station, in which the pattern 38 is aligned with the document, into the exposure station of the copier. The initial registration of the document is maintained as the apertured area 38 is advanced to the exposure station. This will normally be the position in which the lead area of the pattern 38 is adjacent the downstream or registration edge of the exposure platen 24 of the copier. The apertured areas 38 are in at least two discrete and minor areas of the belt which are substantially spaced circumferentially along the surface of the belt in the direction of belt motion. The belt is unapertured and optically smooth and continuous between the spaced apertured areas 38. The spacing between the areas 38 is such that when one pattern 38 has transported its aligned document to the exposure station, no vacuum apertures are exposed to the copier optics for copying from any of the other apertured areas 38. That is, preferably, only one area or pattern of apertures 38 is overlying the platen at any time during which a document is being copied. This can be accomplished by having the circumferential spacing between patterns greater than the dimensions of the platen. However, it will be appreciated that in some copiers, such as those with optical reduction, the dimensions of the platen may be larger than the actual dimensions of the exposure area or exposure station for normal copying. Thus, the spacing along the belt between the apertured areas 38 in such copiers for normal copying need only be equal or greater than the dimensions of the actual exposure station.

It has been additionally found that by appropriate spacing of the apertures 38 along the endless belt 12 circumference that spacing may be such that one area 38 is in the document-loading station, while another area 38 is in the exposure station. Thus, copying of one document (without showthrough or showaround of apertures) may be accomplished simultaneously with the registration loading of the next document over the next area 38. This is particularly desirable in a document handler in which the document is slowed down or stopped in the exposure position, since this allows the positioning and deskewing of the next document to be accomplished during the same time that the previous document is being copied, and with the belt stopped or slowed down. The belt then may be quickly accelerated and decelerated to place this next document in the exposure station while the previous document is being either ejected from the document handler or restacked in the document stacker in the case of a recirculating document handler.

It will be appreciated, that for registering the document on the belt, various systems may be utilized. The system disclosed herein senses the presence and position of one apertured area 38 in the proper position for the infeeding of a document thereover by permanent marking indicia, such as holes, at predetermined positions along at least one edge of the belt outside the optical imaging station exposure of the belt. The document registration then comprises feeding the document onto the belt in registration with the sensed position of the belt by starting document feed rollers or belts, and/or by releasing a registration gate holding the lead edge of the document as illustrated, or the like. However, it would also be possible to provide a loading registration system in which the document is fed uninterruptedly over the belt, and when a document lead edge sensor determines that the lead edge of the document has been fed slightly past the most downstream apertures of the pattern 38, locating the document by pressing it against the belt applying suction and then driving the belt.

With the belt configuration described herein, wherein the maximum dimensions of the apertured area 38 in any direction are smaller than the smallest conventional document to be transported and copied on the document belt 12, and wherein the belt surface is optically continuously uniform to the copier optics everywhere except for said apertures 40, it will be appreciated that with the above-described system, in which the document is placed on the belt so as completely to overlie one entire pattern of apertures 38, and wherein the spacing between the apertured areas 38 is as described above, show-around is completely eliminated, because no apertures are ever exposed to the copier optics and therefore cannot provide visible printout on any copies, for any of the sizes of documents being copied. However, as otherwise indicated herein, to be fully effective, there is also employed the disclosed system for conveying a hold-down force from these apertured areas 38 out under a much larger area of a much larger document, if the document handling system is to have the capability of handling a wider range of document sizes without slippage. This transverse extension of the effective suction provided by the vacuum groove system described herein without causing increased show-around problems for smaller documents, because the grooves themselves, in their unapertured areas, are effectively optically invisible to the copier in the imaging station. The unapertured grooves have effectively the same light reflective background characteristics as the major areas 39 of the belt (between the patterns 38) which are ungrooved.

As an additional feature, as indicated above, by the selection of the appropriate spacing 3 between the hole and groove patterns 38, a completely unapertured and ungrooved area 39 of the belt 12 may be provided which is larger than the entire area of the platen 24. By automatically positioning this completely smooth and continuous light-reflecting background over the platen whenever the document belt is not being used for automatic or semi-automatic document feeding, a platen cover can be provided having the same background-free optical uniformity for manual copying as is conventionally provided by the flexible white rubber sheet platen covers of xerographic copiers which do not have document handlers.

By conventionally mounting the document handling unit 10 pivotally over the platen, the entire unit 10 may be lifted up and a document sheet, book or the like may be placed over the platen manually. When the document handling unit is lowered, the belt 12 will overlie the document and prevent it from lifting out of focus above the platen. This alternative manual copying feature, in which the document belt 12 is stationary, is known in other suction belt document handling systems. Such manual copying may be utilized, for example, with documents whose sizes or conditions are not appropriate for automatic feeding by the document belt. However, such manually-placed documents, particularly unusually small, odd-sized, transparent, or very thin, documents, are ones which often have even more severe show-around or show-through problems than those which are feedable. That is, the copying of shadows of suction apertures through or around documents is often more objectionable in the manual copying mode. This has been considered a serious disadvantage in the use of a document feeder in comparison with a fixed surface manual platen cover. It has even been proposed to provide an alternative manual platen cover in place of the suction belt for the manual copying mode, but this obviously adds complexity and cost. All of these problems have been eliminated by the present invention.

In order to provide the desired completely unapertured and ungrooved continuous single belt surface over the platen for manual copying, there are provided two cooperating features: an adequate spacing of unapertured belt area 39 between at least two of the patterns 38, and a means for automatically registering this area 39 over the platen when the copier is to be used for manual copying. For example, if the blank pitch 39 between apertures is on the order of 380 mm (for a platen of that dimension) this 380 mm long segment of the belt must be centered over the platen to avoid any exposure of any suction apertures 40. Note that, as described above, this is not the normal stopping position of the belt during automatic or semi-automatic document feeding. The normal stopping position is with one apertured area 38 overlying the platen. Thus, a separate and additional belt registration mode is preferably provided. This separate registration mode causes the document belt to advance or cycle by an additional odd increment to move the apertured area 38 which was previously overlying the platen out of the exposure station, to overlay the exposure station with an unapertured belt area 39. It has been found that this may be automatically actuated and controlled in various ways. One way is to have the belt drive automatically start, advance for the desired preset distance, and stop automatically upon a switch being actuated by the lifting of the document handling unit 10, since the document handling unit is lifted for manual copying. However, this would cause the belt to be moved when the cover is lifted, which might startle the operator. Thus, it is preferable to have the belt automatically advance into this manual copying position automatically in response to the termination of the automatic or semi-automatic document feeding of the belt. This can be accomplished by a simple timing arrangement which is a part of the controller or timing control 34. That is, when, after a time interval of a few seconds, or less, no additional documents have been fed by the belt, e.g., the belt has not moved during this time period, then the belt will automatically shift from its normal stopping position (with one apertured area 38 over the platen) into its manual copying position with no apertured area 38 over the platen.

The sensing of the belt position can be done with the same cursors or fiduciary position marks on the belt and sensors connected to a servo drive motor for the belt as previously described for the loading registration of the belt patterns 38 with the document. Alternatively, a separate hole or mark in the belt, and/or separate sensor, can be utilized to sense whether the belt is in the proper manual copying position and stop the belt drive in that position. This can also be done on machine start-up.

As a further alternative, it will be appreciated that a system may be designed in which, after each document is copied and ejected or restacked, the belt is automatically stopped in the manual copying position so that the automatic or semi-automatic document feeding may be interrupted at any time, even during a run, for immediate manual copying without moving the belt. As another alternative, a separate button or switch and/or drive could be provided to move the belt into the manual copying position.

The above described arrangement of a document belt with only two apertured areas 38 thereon is particularly desirable for the above described manual copying mode, as allowing a relatively short overall belt length to provide a large unapertured area 39. However, it will be appreciated that the unapertured length 39 of the belt can be provided by increasing the overall belt length in various ways without necessarily substantially increasing the overall size of the document handling unit. For example, as described, the rollers at opposite ends of the document belt may be spaced substantially beyond the edges of the platen, so that an aperture pattern may be spaced off the platen even though it is still in the lower flight of the belt, i.e., in the platen overhang area of the extended belt. Alternatively, larger belt support rollers or multiple rollers or guides which provide convolutions or bights in the return belt flight may be provided to increase the overall belt length. It has also been found, as discussed elsewhere herein, that the apertured areas 38 may be made considerably smaller by restricting them to only the lead edge areas of the smallest document, and this has been found to provide satisfactory document retention with the suction hold-down systems disclosed herein. This reduction of the area 38 of the apertures correspondingly increases the available unapertured pitch 39 therebetween without increasing the overall belt length.

The system disclosed herein is adapted to handle a wide range of document sizes and weights. The following table lists the more common standard document and copy sheets and their approximate sizes, which vary with cutting accuracy, humidity, etc.

Common standard commercial paper sheet sizes

| Size description | Size in inches | Size in centimeters |
|---|---|---|
| 1. U.S. Government (old) | 8×10.5 | 20.3×26.7 |
| 2. U.S. Letter | 8.5×11 | 21.6×27.9 |
| 3. U.S. Legal | 8.5×13 | 21.6×33.0 |
| 4. U.S. Legal | 8.5×14 | 21.6×35.6 |
| 5. U.S. Engineering | 9×12 | 22.9×30.5 |
| 6. ISO* B5 | 6.93×9.84 | 17.6×25.0 |
| 7. ISO* A4 | 8.27×11.69 | 21.0×29.7 |
| 8. ISO* B4 | 9.84×13.9 | 25.0×35.3 |
| 9. Japanese B5 | 7.17×10.12 | 18.2×25.7 |
| 10. Japanese B4 | 10.12×14.33 | 25.7×36.4 |

*International Standards Organization

As previously noted, with the present system, show-around of the suction apertures is prevented by ensuring that any document which is imaged overlies all of the apertures adjacent its edges, i.e., the apertures are all located well inside of the document edges so as to underlie the document in the area being imaged. Those apertures which must be outside the area covered by a small document will be sufficiently distantly spaced from the document edges so as not to be imaged. This is enabled by the vacuum groove construction which allows suction from the apertures to be applied not just in the local area of the apertures, but rather to be extended along the grooves under all, or substantially all, of the full dimension of the document. If the smallest documents to be copied are, for example, International Standard B5 sized sheets, all of the suction holes can be located within an area of that size (176×250 mm), and there will be no holes visible to the copier lens when it is in its registered position. As indicated above, this is greatly assisted by having all of the holes in specific pattern areas 38 which are widely spaced between unapertured areas 39 around the belt's circumference, coupled with a registration or timing means which ensures that the documents are fed onto the document belt only in registration with a hole pattern area 38, i.e., each document is individually fed only as a pattern area 38 approaches the proper position for feeding the document into registration therewith. Note that the document sheet may be driven into registration with the belt, or the belt may be driven into registration with the document. That is, the speed or position of either the document or the belt may be controlled by the conventional drives for either, which may be suitable mechanical systems or servo-motor driven.

For a good capture of the lead edge of the document, this registration and feeding is preferably arranged so that, as illustrated by the dashed line document outline 23 in Fig. 2, the lead edge of the document extends only a few millimeters beyond the first or leading apertures 40 in the pattern 38. With the transverse grooves illustrated here, this also means that the lead edge of the document extends slightly beyond the groove pattern. Thus, the leading and trailing edges of the document may completely cover the groove patterns and extend over ungrooved as well as unapertured areas of the belt. With appropriate spacing of the areas 38, one document can be being acquired or loaded upstream of the platen simultaneously with the imaging of the preceding document.

As additionally illustrated in Fig. 2, for assistance in acquisition of the lead edge, additional transverse extensions 36d of the grooves 36 may be provided. These grooves 36d are integral and connecting short extensions of the outer-most or lead edge groove 36. The grooves 36d are unapertured, but are provided with suction by the apertures 40 in the communicating main groove 36, and act to extend the applied suction out to and slightly beyond the lead edge of the document to provide more positive holddown of the lead edge. However, this is an optional feature. These groove extensions 36d have the same smooth and shallow angle and light-reflecting characteristics as the main grooves 36 so as to be effectively optically invisible to the copier.

It is important to note that in a system as

10

described above, where the distance between the belt and the platen is within the depth of field of the optical system of the copier, the document does not have to be held flat against the document belt to be in focus. Thus, even if only the lead edge area of the document is sucked against the belt, or if less than half of the document width in the case of a large document, is sucked down by an area 38, the remainder of the document can only sag or move away from the belt until it contacts the platen, and will be pulled across the platen by the suctioned areas of the same sheet with relatively low friction, and will still be maintained within the optical depth of field for copying. It is only necessary that the total suction force applied to the document be sufficient to prevent the document from slipping on the belt once it is acquired and registered thereon.

The present system allows an effective suction holding force to be provided with low pressures and low air flow rates, thus requiring much lower power, and also allowing a lower volume (smaller) suction manifold behind the belt. The total number of suction apertures required is greatly reduced. The hole diameters and their total number are small enough for the manifold pressure not to drop significantly even if all the suction holes are exposed, yet the holes are not so small as to have significant clogging problems.

Considering now the suction manifold 18, to reduce both the suction requirements and the potential show-around print-out of vacuum holes even if they are exposed (uncovered), as an alternative, the manifold plate 20 may be apertured only in the actual document imaging area of the smallest document to be imaged. The manifold plate 20 has a white, light-reflective, surface. As the apertured areas of the belt pass over the unapertured areas of the manifold, they would have a light-reflective bottom surface 44 under the apertures 40, even though the apertures 40 are provided with suction. This feature is illustrated in the enlarged cross-sectional views of Figs. 3 and 4, and the broken-away belt area 41 of Fig. 2, where the manifold plate 20 is exposed (for illustration purposes only). This feature helps reduce the potential for print-out of the holes 40. The manifold plate 20 contains spaced suction ports 42 pneumatically connected (open into) to spaced grooves 43 recessed in the outer manifold surface abutting the back of the belt. These grooves 43 in the manifold surface are oriented transversely of the grooves 36 in the belt, but are aligned with the holes 40 in the belt to apply suction thereto. The belt holes 40 are in linear rows in the direction of belt movement aligned with corresponding manifold grooves 43. The grooves 43 in the manifold may be unapertured outside the smallest document imaging area, but extend the full length of the manifold plate 20. Thus, the grooves 43 can communicate suction through the manifold plate to all of the holes 40 at any desired belt position, yet still provide a light-reflective surface 44 under the holes 40. The surface 44 is provided by the unapertured bottom of the grooves 43. In other words, similarly to the pattern of apertures 40 in the belt 12 itself, these apertures 42 in the manifold plate 20 can be restricted to specific minor areas of the manifold which will not normally be exposed to copier optics, and the grooves 43 can extend a substantial distance beyond the last of these apertures across the manifold surface to apply suction to whatever areas of the belt it is desired to apply it. However, even if apertures 42 are provided along the grooves 43 under other belt areas, most of them will still normally be out of alignment with the holes 40, if the hole 42 spacings are different from the hole 40 spacings in the direction of belt movement as well, e.g. a "vernier" non-alignment.

Additionally, or alternatively, as illustrated in Fig. 5, apertures 46 in the manifold plate 47 may be positioned, angled or otherwise constructed to communicate only with the outside edges of the grooves or slots 48 in the manifold plate. As in the grooves 43 of the embodiment of Figs. 3 and 4, these grooves or slots 48 in Fig. 5 are preferably substantially wider than the overlying belt apertures 40, so as to allow for some lateral misalignment or movement of the belt, and unrestricted airflow. Thus, the positioning of these manifold apertures 46 laterally off-set, as in Fig. 5, or otherwise, from the outside edges of the belt apertures 40 prevents any of the manifold apertures 46 from ever directly underlying any of the belt apertures 40, thus ensuring a light-reflective "bottom" 49 for every aperture 40 in the belt. The grooves 48, and the grooves 43, are preferably closely spaced (within less than 2 millimeters, for example), of the outer surface opening of the apertures 40 on the belt imaging surface 37, so that the reflective surfaces 49 or 44 closely underlie the apertures 40 and optically "wash out" part of what would otherwise be a solid dark spot on the copy sheet corresponding to document illumination going into the holes 40 and not being reflected back out.

The grooves 43 or 48 in the manifold can be machined or formed therein, and the holes 42 or 46 drilled through the grooves, or the manifold plate 20 can be monolithically formed by plastics casting, molding or the like, (grooves, hole patterns and all). Alternatively, the manifold plate 20 could be formed by overlaying and securing two separate plates together, one apertured and one grooved. As indicated, these grooves 43 or 48 are preferably made substantially larger in cross-sectional areas than the grooves 36 in the belt 12, so as to provide relatively unrestricted airflow therethrough between the interior of the manifold and the apertures 40 in the belt. It will also be appreciated that the apertures 42 or 46 through the manifold plate 20 or 47 can be in the form of slots or oval apertures to increase their effective opening areas yet enable a decrease in their lateral dimensions or assist in reducing the overlapping of a manifold hole with a belt hole.

To express the above in another way, the above-described system provides a light-reflective surface 44 or 49 closely spaced below the bottoms of the apertures in the belt wherever desired, by normally off-setting most of the apertures in the manifold from the apertures in the belt but providing pneumatic communication between the manifold interior and the belt apertures. This air flow path is through unapertured grooves or the like internally of the manifold, so as to provide an unapertured planar light-reflective surface closely underlying the belt apertures.

It should also be noted that there is only a very small area of suction application to the back of the belt, in the limited areas of the grooves 43 or 48, since they are needed only in the corresponding limited "band" areas of the holes 40. This significantly reduces the frictional drag between the manifold plate 20 and the belt.

Turning now in further detail to the structure and function of the preferred belt grooves 36, as previously indicated each groove provides an independent suction holddown which is not affected by the opening (non-coverage by a document) of any of the other vacuum grooves. That is, even if directly adjacent grooves are not covered by a document because of dog ears, holes, tears, irregular sizes, or mis-registration of the document, the suction in the adjacent grooves are not affected. All of the other, non-affected, grooves can provide a full suction force to capture the document. There is no pressure loss between the grooves. Each groove is separated from the others by a substantial area of the planar surface 37 of the belt.

By having the grooves 36 all, or primarily, run laterally, transverse the direction of movement of the belt, as in Fig. 2, it has been found that a substantial improvement can be provided in the vacuum "capture" of the lead edge area of the document, independently of the size of the document, as opposed to having the grooves run or extend in the direction of movement of the document. With such transverse or lateral grooves, several grooves can act independently to capture the lead edge of the document by applying a suction across the full width of the document. If, because of mis-registration or lead edge curl of the document or the like, the first of these lateral grooves is not covered by the document, the document will still be captured by the subsequent grooves only a few millimeters further downstream of the lead edge of the document, and their holding force is not affected by the failure to capture the document with the first or immediately subsequent groove. Forming the grooves in the belt parallel to the lead edge area of the document has been found to provide an approximately 3 to 1 higher holddown force for the lead edge area of the document in comparison to circumferential belt grooves.

It has further been found that improved vacuum document holding characteristics can be provided by a specific relationship between the area of the holes 40 and the cross-sectional area of their belt grooves 36. Specifically, it has been found that by providing a much higher resistance to the air flow through or along a groove 36 itself as compared with the airflow through the apertures 40 in that groove, that improved suction retention is provided. This is provided, by having the total area of all of the holes 40 in each hole area (aperture band or group) to be more than approximately 5 to 6 times greater than the total cross-sectional areas of that groove 36 on both sides of the hole area (the two air inflow areas to a covered groove area). This ratio is greatly exceeded by the very shallow grooves and relatively large holes disclosed in the above-described specific dimensional examples. Thus, with the large spacing between the two five-aperture groups in Fig. 2, they are also pneumatically independent of one another even within the same groove.

This relatively small cross-sectional area of the shallow grooves provides a substantial restriction or pressure drop in the airflow through the grooves in the areas of the grooves covered by a document. This pressure drop in the groove increases the effective suction (reduced air pressure) under the document along each groove 36 beyond the area 38 of apertures 40, even though part of the groove is not covered by the document, e.g., if part of the grooves is exposed by holes, dog ears (bent or missing corners), or tears in the document. This allows the grooves to extend substantially beyond the edges or sides of narrower documents, as illustrated in Fig. 2, and yet provide a high holddown force for these smaller documents, even though air is being drawn in from the open groove ends which are extending beyond the document, without having to rely only on the Bernoulli effect from the velocity of the air through the groove, and without having to rely only on a static suction provided in a groove which is fully pneumatically sealed by a document.

To express it another way, the drop in pressure in the groove under the outer edge areas of the document applies a higher percentage of the suction manifold pressure to the remainder of the groove underlying the document. The impedance of air flow through these restricted cross-sectional area grooves also substantially reduces the airflow into the apertures 40 which are overlaid by documents, even though the entire groove is not covered. This substantially reduces the total air flow requirements of the system since, as previously described, the apertures 40 are so arranged as normally to be covered by even the smallest document to be copied. Yet, with this system of high air flow impedance grooves, these same limited areas of apertures 40, in only the minor, small document, areas 38 of the belt, can provide high holddown forces over a much greater area for much larger documents by extending the same grooves, without additional holes 40, across the belt over the areas to be overlaid by the larger documents. This is accomplished without significantly increasing the airflow or suction pressure requirements for smaller documents, even through a high percentage or major portion of the grooves are exposed (uncovered) by the small documents.

It should be noted, however, that the resistance to airflow along the belt grooves 36 is very much lower than the resistance to airflow between adjacent grooves in the covered areas. Further, a substantially larger cross-sectional area of grooves than that disclosed above will still provide effective holddown. By increasing the airflow through a larger groove a pressure drop will still occur, predominantly at the edge of the document, wherever the groove extends out beyond the document, since this is where the airflow first encounters a restriction in entering the groove.

To summarise, with the disclosed system, vacuum apertures may be provided in the belt which are spaced well inside the edges of the smallest document. This prevents any possibility of show-around or optical exposure of these holes even if the document is mis-registered or skewed, yet with the disclosed system, the area of applied suction can extend out to the edges of the document through extending unapertured portions of each groove, and without any corresponding increase being required in the airflow. In fact, since the effective area of the applied suction increases with larger documents covering more of the groove length, and since the airflow decreases with larger documents because of the increased covered length of the grooves, the same low power suction source will automatically provide an increased retention of larger documents to the belt without any increase in the power being applied.

For initial acquisition or capture of the documents with a desired low power, low airflow, suction system, the document sheets are initially mechanically pressed or urged against the belt by an angular intersection (sheet beam strength) or with pressing rollers, belts, or the like as in the above-cited US—A—4,043,665. Once the document surface has been mechanically acquired, i.e., is overlying any of the suction groove, there is an almost immediate pressure drop in the grooves because of their very small volume and the relatively much larger cross-sectional areas of the apertures 40 therein. That is, there is a relatively unrestricted suction application through the apertures 40 to the groove once the groove is at least partially covered by the document in the area of the apertures 40. Thus, only a brief initial contact is needed between any area of the document sheet and the belt to obtain suction acquisition of that area of the document, e.g., the line contact of a roller 30 nip, and very low suction power is required to maintain or hold the document thereafter. Assuming a normal relatively high coefficient of friction of the belt surface 37, the static frictional forces between the belt and document are sufficient to prevent relative slippage once even a minor area of the document has been acquired with this suction holddown.

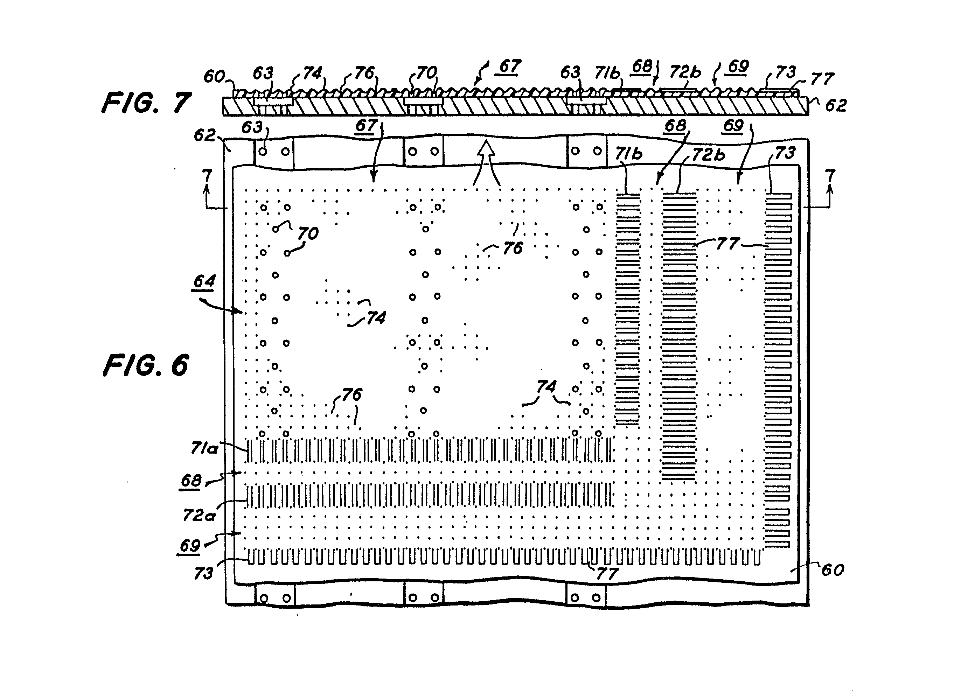

Referring now to Figs. 6, 7 and 8, there is shown therein a distinctly different embodiment. Fig. 6 is a bottom view at the document imaging area of one patterned area 64 of a different belt 60 overlying a portion of the manifold plate 62. As described above, the manifold plate 62 contains grooves 63 for applying suction to the limited areas of apertures 70 of the belt 60. It will be appreciated that the pattern area 64 of the belt 60 illustrated here is, as with the embodiments described above, only a minor portion of the belt, and that the majority of the belt may be both unapertured and ungrooved, i.e., completely smooth. That is, the belt 60 preferably contains only two or three of these patterned areas 64 widely spaced or pitched around the circumference of the belt 60 in the direction of belt motion. For example, two areas 64 of 26 cm circumferential belt length separated by two equal areas of 31 cm belt length.

The pattern 64 of belt 60 of Figs. 6—8 is separated into different vacuum areas for holding and imaging different standard sizes of documents. Specifically it contains a first, central, area 67 for the smallest size document, a second area 68 for larger documents and a third area 69 for the largest documents. The suction apertures 70 in the belt 60 are provided as shown in 3 bands only in the first or central area 67, yet suction is provided from there to all of the other areas. Immediately surrounding the first area 67 on two sides 71a and 71b is a first weir area 71. This narrow border pattern 71 is in turn surrounded on the same two adjacent sides, (for a corner registered document system as here) by a second area 68. The second area 68 is correspondingly bordered on two sides and separated by second weir areas 72a and 72b. This is in turn bordered by the third area 69 which in turn is enclosed by a third weir area 73. Note that the weir areas may slightly interconnect, i.e., be open at their intersecting corners to interconnect (continue) the document suction areas 67, 68, and 69 there.

As illustrated in the cross-section of Fig. 7, the areas 67, 68 and 69 are areas of relatively low airflow resistance or restriction between the document and belt, (i.e., under the document) with relatively large belt grooves 76 providing relatively open paths, whereas the weir areas 71, 72 and 73 are areas of much higher airflow restriction provided by much smaller cross-sectional areas of openings or paths (grooves 77) under the document. It should be noted, however, that Fig. 7 is not to scale. The surface patterns thereon are magnified for drawing clarity.

Referring to Fig. 8, this is a small and highly enlarged section of the central area 67 of the belt 60 in a view corresponding to Fig. 6 plus two orthogonal cross-sectional views of that same small section of the belt. An exemplary suction aperture 70 is illustrated within this belt segment. As may be clearly seen from the two cross-sectional views in Fig. 8, the surface configuration of the belt 60 in the area 67 (and 68 and 69) is, in this example, smoothly and uniformly sinusoidal on both orthogonal axes. Thus, this surface configuration provides grooves 76 in both directions or both axes of the belt surface. However, the surface patterns of any of the areas are not limited to this example. These grooves 76 unrestrictedly distribute under the document, i.e., with little or no pressure drop, the suction applied through the apertures 70 under the document, while the document is held or spaced above the apertures 70 and most of the grooves 76 by the corresponding smooth "bumps" or tops of hills 74 evenly spaced between the intervening grooves or valleys 76 in this pattern.

Referring now to the intervening weir areas 71—73, in contrast, as shown in Fig. 7, these provide airflow restrictive passageways around and between the respective document areas 67—69 for different-sized documents. Those weir areas which are overlain by a document provide a much smaller total cross-sectional groove area under the overlying document, selected to provide a significant airflow restriction. The weir areas may be provided by surface patterns similar to that illustrated in Fig. 8, but much finer, so that the depth and width of the grooves between the bumps is several times smaller in the weir areas, so as to provide much smaller cross-sectional areas for the grooves. However, as shown here instead, all the weir areas are one axis grooves 77.

Examples of the surface pattern dimensions which may be used in the discrete document holding areas 67, 68, 69 is a sinusoidal surface with the period or pitch of the surface waves in both directions, (i.e., the distance between adjacent peaks 74) being approximately 7.6 or 6.4 millimeters, and a groove 76 depth of approximately 1 millimeter between the top of the peaks 74 and the bottom of the grooves 76, and a groove 76 radius of approximately 3.8 mm. In contrast the weir area surface pattern dimensions are several times smaller. One example is image grooves 77 approximately 15 mm long, the same pitch as above, but a flat bottom groove with a depth of only 0.15 mm, 0.3 mm, and 0.66 mm for weirs 73, 72 and 71, respectively. The shorter weir sides 71b and 72b may have slightly deeper (more open) grooves 77 than the longer weir sides 71a and 72a. The inner weirs are designed to provide less air flow restriction than the outer weirs. The specific dimensions, will of course, be selected to match the particular suction system and the desired document holding force needed, depending on the co-efficient of friction between the belt and documents, the maximum document drag forces expected in the system, etc.

Note that the areas 67, 68 and 69 are preferably each formed slightly smaller than a standard document size, respectively. For example, the central apertured area 67 may be slightly smaller than the smallest document to be copied, (e.g., ISO B5 and Japanese B5) (see the above table). The next area, one side of 68 plus 67, may be slightly smaller than the dimensions of the next desired size, (e.g., U.S. 8×10 size), the third (adding the other side of area 68) underlying U.S. 8.5×11 size, etc. The entire pattern 64 is preferably designed to the configuration disclosed in Fig. 6, which is generally to scale, to accommodate all of the common standard document sizes listed above such that the trailing and inside edges of any of these documents, when properly registered, will be continuously in a weir area. This restricts airflow from these document edges towards the apertures 70, and therefore helps maintain a sufficient suction holding level under the entire document with a lower airflow. With such restricted airflow from the outermost overlaid weir patterns, the majority of the manifold suction level (all of which is applied through apertures 70 in area 67) will be transmitted with some, but not an excessive, suction head loss out through the inner weirs and any gaps there-between to whichever of the other areas 68 or 69 is covered by a particular document. These areas 68 and 69 then distribute this suction over their own areas with little or no pressure drop. Further, since the weir groove 77 pattern in the exposed weir areas around the document edges is much finer, and unapertured, show-around tendencies therefrom are further reduced.

With the belt 60 pattern of Fig. 6, the document would be loaded onto the belt 60 with its lead edge extending slightly (e.g., 4 mm) upstream of the upstream edge of the patterned area 64, i.e., slightly above the line 7—7 in Fig. 6. One side of the document would also be registered to the belt 60 slightly overlying the left side of the patterned area 64 in the corner registration system disclosed here. Thus, two sides of the document will be in completely unapertured and ungrooved belt areas, and normally thereby provide suction seals at those sides.

Another embodiment, with a different belt pattern of apertures and grooves, can have a "sunburst", or radially-extending (and branching) suction groove pattern. Various other groove patterns can be provided.

**Claims**

1. Document-handling apparatus (10) for transporting documents (23) with a suction belt (12, 60) to the imaging station (24) of a copier, where the documents may be imaged against a light-reflective document-imaging surface (37) on a first side of said belt, in which the documents are attracted to the first side of said belt by suction applied from a manifold (18) at the second side of the belt through multiple passages (40, 70) extending through the belt, characterised by;

the openings of the suction passages being limited to areas (38, 67) of the first side of the belt coverable by the smallest document to be imaged thereagainst, to avoid show-around exposure of the passages during imaging,

the first side of the belt having a multiplicity of suction channels (36, 76, 77) recess slightly below the light-reflective document-imaging surface thereof,

the suction channels having sufficiently gently sloping walls (36a) to avoid imaged edge shadows thereof at the imaging station, and light-reflective characteristics substantially equal to, or better than, the document-imaging surface to avoid show-around imaging of the channels,

the openings of the suction passages in the first side of the belt being recessed within said suction channels and spaced substantially below the document-imaging surface, with the suction channels being in fluid communication with the suction passages and extending unapertured outwardly from and beyond the suction passages over the document-imaging surface of the belt,

the suction passages being sufficiently large to provide a low impedance to air flow from the suction channels, to provide airflow along the suction channels into the passages from the direction of the edges of a document, thereby to generate suction holddown forces between the document and the belt, whereby different sizes of documents may be held in position by suction on the document-imaging surface without either the suction passages or the channels being 'seen' by the copier.

2. Apparatus according to claim 1, in which the suction passages are provided only in discrete spaced-apart minor areas of the belt, each of which minor areas is smaller in dimensions than the dimensions of the smallest document to be held by the belt over that area, to provide several document-holding areas along the belt.

3. Apparatus according to Claim 1 or 2, in which the channels extend beyond at least one dimension of the largest documents to be imaged on said belt.

4. Apparatus according to any preceding claim in which the suction channels have transverse dimensions of less than approximately four millimiters to avoid excessive deformation of thin documents held against the belt by suction applied through the passages and channels.

5. Apparatus according to any preceding Claim, in which the suction channels are provided by recesses between a generally sinusoidal pattern on the document imaging surface.

6. Apparatus according to any of Claims 1 to 4, in which the suction channels comprise a plurality of elongated and pneumatically separated grooves (36) in the imaging surface, with discrete such grooves containing discrete suction apertures in limited areas thereof.

7. Apparatus according to Claim 6, in which the suction grooves are pneumatically separated from one another by being spaced apart on the document imaging surface between ungrooved document imaging surface areas of the belt, so that individual grooves with their respective suction apertures provide independently-operating suction forces under an overlying document.

8. Apparatus according to any preceding Claim, in which the total cross-sectional area of the suction apertures in a groove is sufficiently greater than the transverse cross-sectional area of the groove so that the airflow restriction along the groove under a document is significantly greater than the airflow restriction through the apertures into the groove.

9. Apparatus according to any preceding Claim, in which the suction grooves have depths of less than approximately one millimeter.

10. Apparatus according to Claim 1 in which the copier has a first copying mode station by movement of the suction belt, with the apertures in the belt providing suction attraction of the documents, and in a second copying mode in which documents are manually placed at the imaging station and the belt is stationarily placed thereover, and in which the document belt-reflective surface provides an optical background for the documents to be copied at the imaging station in both the copying modes,

there is provided at least one completely unapertured area (39) of the belt which is larger than the area of the imaging station, the unapertured area being spaced between apertured areas of the belt circumferentially along the belt surface in the direction of motion of the belt, and wherein the light-reflective surface of the belt throughout said unapertured area is a single optically-uniform surface, and

belt registration means (50, 52) for automatically positioning and stopping the belt in a first position in which the unapertured area thereof is fully overlying the exposure station when the document-handling system is in the second, manual document placement, mode of operation, so that none of the suction apertures is exposed for copying at the imaging station.

11. Apparatus according to Claim 10, in which the belt registration means has a second, and different, stop position for the belt when the document-handling system is in the first copying mode, in which documents are transported to the imaging station by movement of the suction belt, which second stop position of the belt is with an apertured area of the belt overlying the imaging station.

12. Apparatus according to Claim 10 or 11, in which the belt registration means increments the belt circumferentially from said first stop position to the second stop position automatically in response to the change in operation of the document handling system from the first to the second copying mode.

13. Apparatus according to any of claims 10 to 12, in which the imaging station comprises a copier platen, and wherein the dimensions of the unapertured area of the suction belt are greater than the dimensions of the platen.

14. Apparatus according to any of claims 10 to 13, in which the belt registration means includes sensing means (52) associated with the belt for sensing the circumferential position of the belt relative to its unapertured area.

15. Apparatus according to Claim 14, in which the belt registration means includes permanent marking indicia (50) along at least one border of the belt at predetermined positions on the belt which extend outside the imaging station.

16. Apparatus according to Claim 1, in which, at least two discrete minor suction aperture patterned areas (38) (67) spaced circumferentially along said surface of said belt in the direction of motion of said belt, said belt being unapertured (39) in the space between said suction apertured areas,

each said suction apertured area being smaller in area than the smallest document to be transported by the belt transport; and

including means (30) to register a document in a loading station (26) against the belt completely overlying one said suction apertured area of said belt; and

means (14, 16, 50, 52) to advance said apertured area of said belt from said loading station to said imaging station of said copier;

said spacing between said suction apertured areas being sufficiently great that none of the other said suction apertured areas are exposed for copying when said one suction apertured area is in said imaging station.

17. Apparatus according to Claim 16, in which said means to register a document overlying said one suction apertured area includes sensing means (52) to sense the circumferential position of said belt relative to said suction apertured areas which controls said document registration means to feed said document onto said belt in registration with said sensed position of said belt.

18. Apparatus according to Claim 17, in which said sensing means includes permanent marking indicia (50) at pre-determined positions along at least one edge of said belt extending outside of said imaging station.

19. Apparatus according to Claims 16, 17 or 18, wherein said belt is endless and said suction apertured areas are spaced along said belt by a distance corresponding to the belt distance between said loading station and said imaging station so that one said apertured area is in said document loading station while the adjacent said suction apertured area along said belt is in said imaging station.

20. Apparatus according to any of Claims 16, to 19, in which said belt surface is uniformly light reflecting and optically continuously uniform to said copier in said spaces (39) between said suction apertured areas.

21. Apparatus according to Claim 20, in which said belt contains grooves extending unapertured from said apertured areas slightly into said unapertured areas, said grooves having optical characteristics conforming to said optically uniform surface.

22. Apparatus according to Claim 1, in which said apertures open on said first side of said belt only within minor, spaced, discrete limited first surface areas (67) (68) (69) of said belt, which said first belt surface areas have a first convoluted surface configuration which holds the documents substantially spaced from said suction apertures and provides substantially unrestricted (low impedance) communication of said air flow under the documents from said apertures throughout said first surface areas,

said first surface areas of said belt surface being substantially enclosed by narrow border areas comprising unapertured pneumatic weirs (71, 71a, 71b) (72, 72a, 72b),

said weir areas having a second and much more finely convoluted surface configuration than said first surface areas,

said weir areas providing an air flow therethrough under a document, but with a substantially higher air flow impedance than said first surface areas to provide a substantial restriction in the suction under the document to said suction apertures in said first areas, and

said weir areas being located on said belt surface at positions corresponding to the edges of a conventional size of documents, and configured to provide light reflective characteristics generally corresponding to the remainder of said light reflective document imaging surface of said belt to improve said imaging of documents against said belt.

23. Apparatus according to Claim 22, in which said weir areas are provided in multiple, spaced apart, successive bands on at least two orthogonal sides of each said first surface area of said belt in border positions corresponding to the edges of progressively larger standard sizes of documents to provide alternative underlying weir areas for the edges of alternative standard sizes of documents, and wherein the surface of said belt between said spaced weir areas is configured similarly to said first surface areas to provide a low impedance air flow over the areas of said belt surface between said spaced weir areas under a document.

24. Apparatus according to Claim 22 or 23, in which said suction apertures are provided in said belt only in a central-most portion (67) of said first area of said belt to be overlaid by the smallest document to be transported on said belt which is inside all of said weir areas.

25. Apparatus according to Claims 22, 23 or 24, in which said weir areas comprise narrow bands of surface convolutions in said document imaging surface of said belt with a depth which is several times less than the depth of the surface convolutions in said first surface areas of said belt, and substantially less than 1 millimeter.

26. Apparatus according to Claim 1, in which said gas flow channels are shallow grooves (36) which are highly elongated and extend generally linearly across said document imaging surface transverse the movement direction of said belt to communicate airflow from said apertures along unapertured portions of said grooves under a document, and

said transverse suction grooves are closely spaced apart on at least one area of said document imaging surface, but pneumatically isolated from one another by ungrooved document imaging surface areas of said belt therebetween so that individual said transverse grooves with their respective suction apertures may provide independently operating suction areas transversely under an overlying document area,

said grooves being sufficiently shallow and restricted in cross-sectional area in comparison to said openings of said suction apertures therein to provide a height impedance pneumatically resistive air flow through a groove under an overlying document area to said suction apertures of said groove.

27. Apparatus according to Claim 26, in which the width of said grooves is several times greater than the depths of said grooves, and said grooves have depths of less than approximately one millimeter.

28. Apparatus according to Claims 26 or 27, in which the minimum total area of the openings of said suction apertures in a groove is several times greater than the minimum cross-sectional area of the groove into which these apertures open, so that the pressure drop from said air flow will occur along said grooves under a document rather than in said suction apertures.

29. Apparatus according to Claims 26, 27 or 28, in which the total areas of opening of said suction apertures in an area of one said groove is up to approximately five to six times greater than twice the cross-sectional area of said same area of said one groove.

30. Apparatus according to any of Claims 26 to 29, in which said grooves have depths of substantially less than one millimeter.

31. Apparatus according to any of Claims 26 to 30, in which at least one of said traverse grooves has a plurality of pneumatically connecting longitudinal groove extensions in the direction extending circumferentially, on said belt for assisting in the suction retention of the edge of a document.

32. Apparatus according to any of Claims 26 to 31, in which no surface of said grooves is at more than a 20 degree angle of inclination to said document imaging surface of said belt, and all unapertured areas thereof are optically smoothly continuous to be effectively invisible to said imaging station of said copier.

33. Apparatus according to any of Claims 26 to 32, in which said grooves are smooth undulations in said imaging surface of said belt which are optically invisible to a copier, with groove depths of substantially less than approximately one millimeter, and said grooves are linear and have a generally uniform cross-section, and the width of said grooves is several times greater than the depth of said grooves.

34. Apparatus according to any of Claims 26 to 33, in which said suction apertures in said belt are limited to areas within narrow and spaced apart circumferential bands along the direction of movement of said belt.

35. Apparatus according to Claim 34, in which said bands of apertures are spaced apart transversely on said belt along said transverse grooves, with a first set of plural apertures of one said band in one part of a groove, and at least one other set of apertures of another said band spaced apart along said same groove from said first group.

36. Apparatus according to Claims 34 or 35, wherein said two bands of apertures are spaced apart by less than the transverse dimensions of the smallest document to be imaged on said belt to underly opposite end areas thereof.

37. Apparatus according to Claim 1, in which the documents are suction attracted toward said first side of said belt by an air flow applied from suction apertures (42) (46) in a light reflective manifold (18) surface (20) (47) (62) at the backside of said belt, which suction is communicated from said manifold apertures (42) (46) through said further apertures (40) (69) in said belt which open on said first side of said belt,

said manifold surface at said backside of said belt has elongated grooves (43) (48) (63) slightly recessed in said manifold surface,

said manifold surface grooves extend in the direction of movement of said belt spaced apart transverse the direction of movement of said belt, and relatively narrow in comparison to the overall width of said belt,

said suction apertures in said manifold surface open recessed within said grooves in said manifold surface;

said belt apertures are in narrow bands of apertures similarly transversely spaced apart and similarly extending in the direction of movement of said belt to generally overlie said grooves in said manifold surface,

said manifold surface grooves have a sufficiently large cross-sectional area to provide relatively unrestricted air flow from said manifold surface apertures along said grooves under said belt to said belt apertures.

38. Apparatus according to Claim 37, in which said manifold grooves have light reflective bottom surfaces (44) (49) closely spaced below said backside of said belt, and in which said suction aperture openings in said manifold surface are so positioned that at least most of them are non-aligned and transversely spaced from said apertures in said belt, so as not to underlie said belt apertures, and so that most of said belt apertures closely overlie said light reflective bottom surface of said grooves to provide a light reflective surface for said document illumination in said imaging station to reduce the imaging of belt apertures which are exposed in said imaging station.

39. Apparatus according to Claims 37 or 38, in which said suction apertures in said manifold surface are located only in limited minor lengths of said grooves which underlie a portion of said imaging station and which correspond to the limited area of the belt overlaid by the smallest document to be moved by said belt to said imaging station, and wherein the unapertured major lengths of said grooves communicate said air flow from said limited apertured area of said manifold surface for a substantial distance under said belt in the direction of document motion to other said suction apertures in said belt which are substantially outside of said limited area, so that all said other belt apertures outside of said limited apertured area of said grooves are all closely underlaid by a continuous, completely unapertured light reflective bottom surface (44) (49) of said grooves.

40. Apparatus according to Claims 37, 38 or 39, in which said manifold surface outside of said grooves therein provides a pneumatic seal along the edges of said grooves against the backside of said belt to restrict the area of application of suction to only the minor areas of the backside of said belt corresponding to the areas of said grooves, to reduce friction between the backside of said belt and said manifold surface.

41. Apparatus according to any of Claims 37 to 40, in which the spacings between said suction apertures in said manifold surface and the spacings between said suction apertures in said belt are non-integrally divisible different spacings, to provide a reduced coincidence of alignment of a manifold surface aperture with a belt aperture during movement of the belt.

42. Apparatus according to any of Claims 37 to 41, in which said grooves in said manifold surface are substantially wider than said corresponding overlying bands of suction apertures in said belt, and wherein said suction apertures in said manifold surface are positioned toward the outside edges of said grooves in positions which do not underlie any of the apertures in said belt.

43. Apparatus according to any of Claims 37 to 42, in which said belt has grooves on said first side of said belt communicating with said apertures in said belt, and wherein said grooves in said belt extend transversely of the direction of said grooves in said manifold surface.

**Revendications**

1. Appareil (10) de manipulation de document pour le transport de documents (23) par une courroie à aspiration (12, 60) jusqu'à un poste de formation d'image (24) d'une machine de reproduction, où les documents peuvent être soumis à une formation d'image contre une surface (37) d'imagerie réfléchissant la lumière sur un premier côté de la courroie, dans lequel les documents sont attirés vers ce premier côté de la courroie par une aspiration appliquée à partir d'un collecteur (18) au second côté de la courroie par l'intermédiaire de passages multiples (40, 70) s'étendant à travers la courroie, caractérisé par:

— les ouvertures des passages d'aspiration sont limitées à des zones (38, 67) du premier côté de la courroie pouvant être recouvertes par le document le plus petit dont on veut faire une image, afin d'éviter l'exposition avec "contournement" des passages pendant la formation d'image;
— le premier côté de la courroie ayant une multiplicité de canaux d'aspiration (36, 76, 77) légèrement en retrait au-dessous de la surface d'imagerie de document réfléchissant la lumière de la courroie;
— les canaux d'aspiration comportant des parois suffisamment en pente douce (36a) pour éviter qu'il y ait formation d'ombres des bords au poste de formation d'image, et ayant des caractéristiques de réflexion de la lumière sensiblement égales ou supérieures à celles de la surface d'imagerie de document afin d'éviter l'imagerie par "contournement" des canaux;
— les ouvertures des passages d'aspiration dans le premier côté de la courroie étant évidées à l'intérieur des canaux d'aspiration et sensiblement espacées du dessous de la surface d'imagerie de document, avec les canaux d'aspiration communiquant par fluide avec des passages d'aspiration et s'étendant sans ouverture vers l'extérieur et au-delà des passages d'aspiration sur la surface d'imagerie de document de la courroie;
— les passages d'aspiration étant suffissamment grands pour fournir une faible impédance au courant d'air provenant des canaux d'aspiration, pour fournir un courant d'air le long des canaux aspiration débouchant dans les passages à partir de la direction des bords d'un document, ce qui se traduit par la production de forces de maintien par aspiration entre le document et la courroie, d'où il résulte que des formats différents des documents peuvent être maintenus en place par aspiration sur la surface d'imagerie de document sans que soit les passages d'aspiration soit les canaux soient "vus" par la machine de reproduction.

2. Appareil selon la revendication 1 dans lequel les passages d'aspiration sont prévus seulement dans des zones mineures finies, espacées, de la courroie, chacune des zones mineures a des dimensions plus petites que les dimensions du document le plus petit devant être maintenu par la courroie sur cette surface, afin de fournir plusieurs zones demaintien de document le long de la courroie.

3. Appareil selon la revendication 1 ou 2, dans lequel les canaux s'étendent au-delà d'au moins une cote des documents les plus grands devant être soumis à une formation d'image sur la courroie.

4. Appareil selon l'une quelconque des revendications précédentes, dans lequel les canaux d'aspiration ont des dimensions transversales inférieures à environ 4 millimètres afin d'éviter une déformation excessive des documents fins maintenus contre la courroie par une aspiration appliquée par l'intermédiaire des passages et des canaux.

5. Appareil selon l'une quelconque des revendications précédentes dans lequel les canaux d'aspiration sont fournis par des évidements entre un motif généralement sinusoïdal sur la surface d'imagerie de document.

**0 032 446**

6. Appareil selon l'une quelconque des revendications 1 à 4, dans lequel le canaux d'aspiration comportent une pluralité de rainures allongées et séparées pneumatiquement (36) sur la surface d'imagerie, avec les rainures finies contenant des ouvertures d'aspiration finies dans des zones limitées de celles-ci.

7. Appareil selon la revendication 6, dans lequel les rainures d'aspiration sont séparées pneumatiquement les unes des autres en étant espacées sur la surface d'imagerie de document entre des zones de surface d'imagerie de document non rainurées de la courroie, de sorte que des rainures individuelles avec leurs ouvertures respectives d'aspiration fournissent des forces d'aspiration agissant indépendamment au-dessous d'un document les recouvrant.

8. Appareil selon l'une quelconque des revendications précédentes, dans lequel la surface totale en coupe des ouvertures d'aspiration dans une rainure est suffisamment supérieure à la surface en coupe transversale de la rainure de sorte que la limitation du courant d'air le long de la rainure sous un document est sensiblement supérieure à la limitation du courant d'air traversant les ouvertures pour entrer dans la rainure.

9. Appareil selon l'une quelconque des revendications précédentes, dans lequel les rainures d'aspiration ont des profondeurs inférieures à environ un millimètre.

10. Appareil selon la revendication 1, dans lequel la machine de reproduction comporte un poste de premier mode de reproduction par déplacement de la courroie à aspiration, avec les ouvertures de la courroie fournissant une attraction des documents par aspiration, et un second mode de reproduction dans lequel les documents sont placés manuellement au poste de formation d'image et la courroie est placée en position fixe au-dessus, et dans lequel la surface réfléchissante de la courroie à document fournit un fond optique pour les documents devant être reproduits au poste de formation d'image dans les deux modes de reproduction;

— on a prévu au moins une zone (39) totalement exempte d'ouvertures dans la courroie qui est supérieure à la zone du poste de formation d'image, la zone exempte d'ouvertures étant espacée entre les zones munies d'ouvertures de la courroie circonférentiellement le long de la surface de la courroie dans le sens de déplacement de la courroie, et où la surface réfléchissant la lumière de la courroie par l'intermédiaire de la zone exempte d'ouvertures est une seule surface uniforme sur le plan optique et;

— un moyen de cadrage sur courroie (50, 52) pour automatiquement postionner et arrêter la courroie dans une première position dans laquelle sa surface exempte d'ouvertures recouvre totalement le poste d'exposition lorsque le système de manipulation de document se trouve dans le second mode de fonctionnement, avec placement manuel des documents, de sorte qu'aucune des ouvertures d'aspiration n'est exposée pour reproduction au poste de formation d'image.

11. Appareil selon la revendication 10, dans lequel le moyen de cadrage sur courroie a une seconde position d'arrêt, différente, pour la courroie lorsque le système de manipulation de document se trouve dans le premier mode de reproduction, dans lequel les documents sont transportés jusqu'au poste de formation d'image par déplacement de la courroie à aspiration, seconde position d'arrêt de la courroie qui présente une zone à ouvertures de la courroie recouvrant le poste de formation d'image.

12. Appareil selon la revendication 10 ou 11, dans lequel le moyen de cadrage sur courroie incrémente circonférentiellement la courroie entre la première position d'arrêt et la seconde position d'arrêt automatiquement en réponse à un changement de fonctionnement du système de manipulation de document pour le faire passer du premier au second mode de reproduction.

13. Appareil selon l'une quelconque des revendications 10 à 12, dans lequel le poste de formation d'image comprend une platine d'appareil de reproduction, et où les dimensions de la surface exempte d'ouvertures de la courroie à aspiration sont supérieures aux dimensions de la platine.

14. Appareil selon l'une quelconque des revendications 10 à 13, dans lequel le moyen de cadrage par courroie comprend un moyen de détection (52) associé à la courroie pour détecter la position circonférentielle de la courroie par rapport à sa surface exempte d'ouvertures.

15. Appareil selon la revendication 14, dans lequel le moyen de cadrage sur courroie comprend des repères permanents de marquage (50), le long d'au moins une bord de la courroie à des positions prédéterminées sur la courroie qui s'étendent à l'extérieur du poste de formation d'image.

16. Appareil selon la revendication 1, dans lequel:

— au moins deux zones mineures finies comportant des motifs d'ouvertures d'aspiration (38) (67) espacées circonférentiellement le long de la surface de la courroie dans le sens de déplacement de la courroie, la courroie étant exempte d'ouvertures (39) dans l'espace séparant les zones munies d'ouvertures d'aspiration;

— chaque zone munie d'ouvertures d'aspiration ayant une surface inférieure à celle du document le plus petit devant être transporté par le dispositif de transport par courroie;

— et comportant un moyen (30) pour cadrer un document dans un poste de chargement (26) contre la courroie recouvrant complètement ladite zone munie d'ouvertures d'aspiration de la courroie; et

— un moyen (14, 16, 50, 52) pour faire avancer la zone munie d'ouvertures de la courroie entre le poste de chargement et le poste de formation d'image de l'appareil de reproduction;

— cet espacement entre les zones munies d'ouvertures d'aspiration étant suffisamment grand pour qu'aucune des autres zones munies d'ouvertures d'aspiration soit exposée pour reproduction lorsque ladite zone munie d'ouvertures d'aspiration se trouve dans le poste de formation d'image.

17. Appareil selon la revendication 16, dans lequel le moyen de cadrage d'un document recouvrant ladite zone munie d'ouvertures d'aspiration comprend un moyen de détection (52) pour détecter la position circonférentielle de la courroie par rapport aux zones munies d'ouvertures d'aspiration, qui commande le moyen de cadrage de document afin d'introduire le document sur la courroie en cadrage avec la position détectée de la courroie.

18. Appareil selon la revendication 17, dans lequel le moyen de détection comprend des repères permanents (50) à des positions prédéterminées le long d'au moins un bord de la courroie s'étendant à l'extérieur du poste de formation d'image.

19. Appareil selon les revendications 16, 17 ou 18, où la courroie est sans fin et les zones munies d'ouvertures d'aspiration sont espacées le long de la courroie d'une distance correspondant à la distance de la courroie entre le poste de chargement et le poste de formation d'image de sorte que ladite zone munie d'ouvertures se trouve dans le poste de chargement de document alors que la zone contiguë munie d'ouvertures le long de la courroie se trouve dans le poste de formation d'image.

20. Appareil selon l'une quelconque des revendications 16 à 19, dans lequel la surface de la courroie réfléchit uniformément la lumière et est uniforme continuellement sur le plan optique vis-à-vis de la machine de reproduction dans les espaces (39) entre les surfaces munies d'ouvertures d'aspiration.

21. Appareil selon la revendication 20, dans lequel la courroie contient des rainures s'étendant sans ouvertures entre les zones munies d'ouvertures pour pénétrer légèrement dans les zones exemptes d'ouvertures, les rainures ayant des caractéristiques optiques se conformant à la surface uniforme sur le plan optique.

22. Appareil selon la revendication 1, dans lequel les ouvertures débouchent sur le premier côté de la courroie seulement à l'intérieur de premières zones en surface limitées, finies, espacées, mineures (67) (68) (69) de la courroie, premières zones en surface de la courroie ayant une première configuration en surface convolutée qui maintient les documents sensiblement espacés des ouvertures d'aspiration et fournit une communication sensiblement non limitée (faible impédance) du courant d'air au-dessous des documents à partir des ouvertures sur toutes les premières zones en surface;

— les premières zones en surface de la surface de courroie étant sensiblement enfermée par des zones étroites en bordure comprenant des déversoirs pneumatiques sans ouvertures (71, 71a, 71n) (72, 72a, 72b);

— les zones en forme de déversoir ayant une seconde configuration de surface beaucoup plus finement convolutée que les premières zones en surface;

— les zones en forme de déversoir fournissant un courant d'air au-dessous d'un document, mais avec une impédance de courant d'air sensiblement supérieure aux premières zones en surface afin de fournir une limitation importante de l'aspiration sous le document aux ouvertures d'aspiration dans les premières zones; et

— les zones en forme de déversoir étant situées sur la surface de la courroie à des positions correspondant aux bords d'un format classique des documents, et ayant une configuration permettant de fournir des caractéristiques de réflexion de la lumière correspondant généralement au reste de la surface d'imagerie de document réfléchissant la lumière de la courroie afin d'améliorer l'imagerie des documents contre la courroie.

23. Appareil selon la revendication 22, dans lequel les zones en forme de déversoir sont prévues dans de multiples bandes successives, espacées, sur au moins deux côtés orthogonaux de chacune des premières zones en surface de la courroie dans des positions en bordure correspondant aux bords de formats standard progressivement plus grands de documents afin de fournir des zones alternatives en forme de déversoir sous-jacentes pour les bords d'autres formats standard de documents et où la surface de la courroie entre les zones espacées en forme de déversoir a une configuration similairement à celle des premières zones en surface de manière à fournir un courant d'air de faible impédance sur les zones de la surface de la courroie entre les zones espacées en forme de déversoir au-dessous d'un document.

24. Appareil selon la revendication 22 ou 23, dans lequel les ouvertures d'aspiration sont prévues dans la courroie seulement dans une partie la plus centrale (67) de la première zone de la courroie devant être recouverte par le document le plus petit qui doit être acheminé sur la courroie qui se trouve à l'intérieur de la totalité des zones en forme de déversoir.

25. Appareil selon les revendications 22, 23 ou 24, dans lequel les zones en forme de déversoir comportent des bandes étroites de convolutions en surface dans la surface d'imagerie de document de la courroie avec une profondeur qui est plusieurs fois inférieure à la profondeur des convolutions en surface dans les premières zones en surface de la courroie, et sensiblement inférieure à 1 millimètre.

26. Appareil selon la revendication 1, dans lequel les canaux de circulation de gaz sont constitués de rainures peu profondes (36) qui sont très allongées et s'étendent généralement dans le sens linéaire à travers la surface d'imagerie de document transversale au sens de déplacement de la courroie de manière à transmettre le courant d'air à partir des ouvertures le long des parties exemptes de trous des rainures au-dessous d'un document, et

— les rainures transversales d'aspiration sont étroitement espacées sur au moins une zone de la surface d'imagerie de document, mais pneumatiquement isolées les unes des autres par des zones en surface d'imagerie de document de la courroie non rainurées situées entre elles, de sorte que les rainures transversales individuelles avec leurs ouvertures respectives d'aspiration peuvent fournir des zones d'aspiration fonctionnant indépendamment transversalement au-dessous d'une zone de document en recouvrement;

— les rainures étant suffissamment peu profondes et ayant une section en coupe limitée par rapport aux parties ouvertes des ouvertures d'aspiration ménagées dedans afin de fournir un courant d'air résistant pneumatiquement d'impédance élevée à travers une rainure sous une zone de document en recouvrement vers les ouvertures d'aspiration de la rainure.

27. Appareil selon la revendication 26, dans lequel la largeur des rainures est égale à plusieurs fois la profondeur des rainures, et les rainures ont des profondeurs inférieures à environ un millimètre.

28. Appareil selon les revendications 26 ou 27, dans lequel la surface totale minimum des parties ouvertes des ouvertures d'aspiration dans une rainure est égale à plusieurs fois la surface en coupe minimum de la rainure dans laquelle ces ouvertures débouchent, de sorte que la chute de pression due au courant d'air se produira le long des rainures sous un document et non dans les ouvertures d'aspiration.

29. Appareil selon les revendications 26, 27 ou 28, dans lequel les aires totales des parties ouvertes des ouvertures d'aspiration dans une surface de ladite rainure sont jusqu'à cinq à six fois supérieures au double de l'aire en coupe de la même surface de la rainure.

30. Appareil selon l'une quelconque des revendications 26 à 29, dans lequel les rainures ont des profondeurs sensiblement inférieures à un millimètre.

31. Appareil selon l'une quelconque des revendications 26 à 30, dans lequel au moins l'une des rainures transversales comporte une pluralité d'extension longitudinales de connexion pneumatique dans la direction s'étendant circonférentiellement, sur la courroie pour faciliter le maintien sous vide du bord d'un document.

32. Appareil selon l'une quelconque des revendications 26 à 31, dans lequel aucune surface des rainures ne se trouve à un angle d'inclinaison supérieur à 20 degrés par rapport à la surface d'imagerie de document de la courroie, et toutes ses zones sans ouverture sont régulièrement continues sur la plan optique de manière à être effectivement invisibles pour le poste de formation d'image de la machine de reproduction.

33. Appareil selon l'une quelconque des revendications 26 à 32, dans lequel les rainures sont des ondulations régulières dans la surface d'imagerie de la courroie qui sont optiquement invisibles pour une machine de reproduction, avec des profondeurs de rainure sensiblement inférieures à environ un millimètre, et les rainures sont linéaires et ont une section en coupe généralement uniforme, et la largeur des rainures est plusieurs fois supérieure à la profondeur des rainures.

34. Appareil selon l'une quelconque des revendications 26 à 33, dans lequel les ouvertures sous vide de la courroie sont limitées à des zones à l'intérieur de bandes circonférentielles étroites et espacées dans le sens de déplacement de la courroie.

35. Appareil selon la revendication 34, dans lequel les bandes d'ouvertures sont espacées transversalement sur la courroie le long des rainures transversales, avec un premier jeu de plusieurs ouvertures d'une bande dans une partie d'une rainure, et au moins un autre jeu d'ouvertures d'une autre bande espacée le long de la même rainure par rapport au premier groupe.

36. Appareil selon les revendications 34 ou 35, où les deux bandes d'ouvertures sont espacées d'au moins les dimensions transversales du document le plus petit devant faire l'objet d'une image sur la courroie de manière à se trouver au-dessous de zones extrêmes opposées de celui-ci.

37. Appareil selon la revendication 1, dans lequel les documents sont attirés par vide vers le premier côté de la courroie par un courant d'air appliqué à partir d'ouvertures d'aspiration (42) (46) dans une surface (20) (47) (62) d'un collecteur (18) réfléchissant la lumière au côté arrière de la courroie, aspiration qui est transmise des ouvertures (42) (46) du collecteur par l'intermédiaire des autres ouvertures (40) (69) de la courroie qui débouchent sur le premier côté de la courroie;

— la surface du collecteur au côté arrière de la courroie comporte des rainures allongées (43) (48) (63) légèrement en retrait dans la surface du collecteur;

— les rainures de la surface du collecteur s'étendent dans le sens de déplacement de la courroie espacées transversalement au sens de déplacement de la courroie, et relativement étroites par rapport à la largeur hors-tout de la courroie;

— les ouvertures d'aspiration de la surface du collecteur débouchent dans des évidements à

41   **0 032 446**   42

l'intérieur des rainures de la surface du collecteur;

— les ouvertures de la courroie se présentent en bandes étroites d'ouvertures similairement espacées transversalement et similairement situées dans le sens de déplacement de la courroie de manière à recouvrir généralement les rainures de la surface du collecteur;

— les rainures de la surface du collecteur ont une aire en coupe suffissamment grande pour fournir un débit d'air relativement non limité à partir des ouvertures de la surface du collecteur le long des rainures au-dessous de la courroie jusqu'aux ouvertures de la courroie.

38. Appareil selon la revendication 37, dans lequel les rainures du collecteur ont des surfaces inférieures (44) (49) réfléchissant la lumière, étroitement espacées au-dessous du côté arrière de la courroie, et dans lequel les parties ouvertes des ouvertures d'aspiration dans la surface du collecteur sont placées de façon qu'au moins la plupart d'entre elles soient non alignées et espacées transversalement des ouvertures de la courroie, de manière à ne pas se trouver au-dessous des ouvertures de la courroie, et afin que la majorité des ouvertures de la courroie recouvrent étroitement la surface inférieure réfléchissant la lumière des rainures pour fournir une surface réfléchissant la lumière pour l'éclairage des documents dans le poste de formation d'image afin de réduire l'imagerie des ouvertures de la courroie qui sont exposées dans le poste de formation d'image.

39. Appareil selon les revendications 37 ou 38, dans lequel les ouvertures d'aspiration de la surface du collecteur sont placées seulement dans des longueurs mineures limitées des rainures qui sont au-dessous d'une partie du poste de formation d'image et qui correspondant à la zone limitée de la courroie recouverte par le document le plus petit devant être déplacé par la courroie sous vide jusqu'au poste de formation d'image, et ou les longueurs principales sans ouverture des rainures font communiquer le courant d'air à partir de la zone limitée à ouvertures de la surface du collecteur sur une distance importante au-dessous de la courroie dans le sens de déplacement du document vers d'autres ouvertures d'aspiration dans la courroie qui sont sensiblement à l'extérieur de la zone limitée, de sorte que la totalité des autres ouvertures de la courroie à l'extérieur de la zone limitée à ouvertures des rainures sont étroitement au-dessus d'une surface inférieure réfléchissant la lumière, continue, totalement exempte d'ouvertures (44) (49) des rainures.

40. Appareil selon les revendications 37, 38 ou 39 dans lequel la surface de collecteur à l'extérieur des rainures fournit un joint pneumatique le long des bords des rainures contre le côté arrière de la courroie de manière à limiter la surface d'application de l'aspiration aux seules zones mineures du côté arrière de la courroie correspondant aux zones des rainures, de manière à réduire la friction entre le côté arrière de la courroie et la surface du collecteur.

41. Appareil selon l'une quelconque des revendications 37 à 40, dans lequel les espacements entre les ouvertures d'aspiration de la surface du collecteur et les espacements entre les ouvertures d'aspiration de la courroie sont des espacements différents, divisibles, non en une pièce, afin de fournir une coïncidence réduite de l'alignement d'une ouverture en surface du collecteur avec une ouverture de la courroie pendant le déplacement de la courroie.

42. Appareil selon l'une quelconque des revendications 37 à 41, dans lequel les rainures de la surface du collecteur sont sensiblement plus larges qui les bandes sur-jacentes correspondantes des ouvertures d'aspiration de la courroie, et où les ouvertures d'aspiration de la surface du collecteur sont placées vers les côtés extérieurs des rainures dans des positions qui ne se trouvent pas au-dessous de l'une quelconque des ouvertures de la courroie.

43. Appareil selon l'une quelconque des revendications 37 à 42, dans lequel la courroie comporte des rainures sur le premier côté de la courroie qui communiquent avec les ouvertures de la courroie, et où les rainures de la courroie s'étendent transversalement au sens des rainures de la surface du collecteur.

**Patentansprüche**

1. Dokumentenzuführeinrichtung (10) zum Transportieren von Dokumenten (23) mit einem Saugriemen (12, 60) zur Ablichtungsstation (24) eines Kopiergerätes, wo die Dokumente gegen die lichtreflektierende Dokumentenablichtungsseite (37) auf der ersten Seite des Riemens abgelichtet werden, wobei die Dokumente an die erste Seite des Riemens durch Saugwirkung angezogen werden, die von einer Saugleitung (18) auf der zweiten Seite des Riemens durch eine Vielzahl von Kanälen (40, 70) erzeugt wird, die sich durch den Riemen erstrecken, dadurch gekennzeichnet, daß

die Öffnungen der Saugkanäle auf Flächenbereiche (38, 67) der ersten Seite des Riemens beschränkt sind, die durch das kleinste abzulichtende Dokument bedeckbar sind, um eine Belichtung von Kanälen um das Dokument herum während der Ablichtung zu vermeiden,

daß die erste Seite des Riemens eine Vielzahl von Saugkanälen (36, 76, 77) aufweist, die unter seiner lichtreflektierende Dokumentenablichtungsfläche leicht vertieft sind.

daß die Saugkanäle ausreichend sanft abgeschrägte Wände (36a) aufweisen, um abgebildete Randschatten derselben an der Ablichtungsstation zu vermeiden und die lichtreflektierende Eigenschaften aufweisen, die im wesentlichen gleich oder besser als die der Dokumentenablichtungsfläche sind, um eine Abbildung der Kanäle um das Dokument herum zu vermeiden,

daß die Öffnungen der Saugdurchlässe in der ersten Seite des Riemens innerhalb der Saugkanäle vertieft und im wesentlichen unterhalb der Dokumentenabbildungsfläche beabstandet sind, wobei die Saugkanäle in Fluidverbindung mit den Saugdurchlässen sind und sich ohne Löcher außerhalb von und über die Saugdurchlässe hinaus über die Dokumentenablichtungsfläche des Riemens erstrecken,

daß die Saugdurchlässe ausreichend groß sind, um einen niedrigen Widerstand der Luftströmung von den Saugkanälen zu bewirken, um eine Luftströmung längs der Saugkanäle in die Durchlässe aus der Richtung der Ränder eines Dokumentes hervorzurufen, um dadurch Niederhaltesaugkräfte zwischen dem Dokument und dem Riemen zu erzeugen, wodurch unterschiedliche Dokumentengrößen durch Festsaugen auf die Dokumentenablichtungsfläche in ihrer Lage gehalten werden können, ohne daß die Saugdurchlässe oder die Kanäle vom Kopiergerät "gesehen" werden.

2. Vorrichtung nach Anspruch 1, bei welcher die Saugdurchlässe nur in diskreten, im Abstand angeordneten kleineren Flächenbereichen des Riemens vorgesehen sind, von denen jeder der kleineren Flächenbereiche kleinere Abmessungen hat, als die Abmessungen des kleinsten vom Riemen über diesem Flächenbereich zu haltenden Dokument, um mehrere Dokumentenhaltebereiche längs des Riemens auszubilden.

3. Vorrichtung nach Anspruch 1 oder 2, bei der die Kanäle sich über wenigstens eine Dimension des größten aud dem Riemen abzulichtenden Dokuments hinaus erstrecken.

4. Vorrichtung nach einem der vorhergehenden Ansprüche, bei der die Saugkanäle Querabmessungen aufweisen, die kleiner als ungefähr 4 mm sind, um eine übermäßige Verformung dünner Dokumente zu vermeiden, die durch über die Durchlässe und Kanäle zugeführter Saugwirkung am Riemen gehalten werden.

5. Vorrichtung nach einem der vorhergehenden Ansprüche, bei der die Saugkanäle durch Vertiefungen zwischen einem im wesentlichen sinusförmigen Muster auf der Dokumentenablichtungsfläche gebildet sind.

6. Vorrichtung nach einem der Ansprüche 1 bis 4, bei der die Saugkanäle aus einer Vielzahl langgestreckter und pneumatisch voneinander getrennter Rillen (36) in der Ablichtungsfläche bestehen, wobei einzelne solcher Rillen diskrete Sauglöcher in beschränkten Bereichen derselben aufweisen.

7. Vorrichtung nach Anspruch 6, bei der die Saugrillen voneinander pneumatisch getrennt sind, indem sie auf der Dokumentenablichtungsseite zwischen ungerillten Dokumentenablichtungsoberflächenbereichen des Riemens im Abstand angeordnet sind, so daß einzelne Rillen mit ihren entsprechenden Sauglöchern unabhängig wirkende Saugkräfte unter einem abdeckenden Dokument hervorrufen.

8, Vorrichtung nach einem der vorhergehenden Ansprüche, bei welcher die Gesamtquerschnittsfläche der Sauglöcher in einer Rille ausreichend größer als die quergerichtete Querschnittsfläche der Rille ist, so daß die Luftströmungsdrosselung längs der Rille unter einem Dokument wesentlich größer ist, als die Luftströmungsdrosselung durch die Löcher in der Rille.

9. Vorrichtung nach einem der vorhergehenden Ansprüche, bei der die Saugrillen Tiefen von weniger als ungefähr 1 mm aufweisen.

10. Vorrichtung nach Anspruch 1, bei der das Kopiergerät eine erste Kopierbetriebsart mit Bewegung des Saugriemens, wobei die Löcher im Riemen eine Sauganziehung der Dokumente bewirken, und eine zweite Kopierbetriebsart aufweist, bei der die Dokumente manuell auf die Ablichtungsstation aufgelegt werden und der Riemen stationär darüber angeordnet wird, und wobei die Dokumentenriemenreflexionsfläche einen optischen Hintergrund für die zu kopierenden Dokumente an der Ablichtungsstation in beiden Kopierbetriebsarten bildet,

es ist wenigstens ein völlig lochloser Flächenbereich (39) des Riemens vorgesehen, der größer ist, als die Fläche der Ablichtungsstation, wobei der lochlose Flächenbereich des Riemens im Abstand zwischen Lochbereichen des Riemens, die im Umfangsrichtung längs der Riemenoberfläche in Bewegungsrichtung des Riemens angeordnet sind, liegt und wobei die lichtreflektierende Fläche des Riemens über genannten lochlosen Bereich eine einzige, optisch gleichförmige Fläche ist, und

eine Riemenpaßlageeinrichtung (50, 52) zum automatischen Positionieren und Anhalten des Riemens in einer ersten Position, in der der lochlose Bereich desselben voll die Belichtungsstation überdeckt, wenn das Dokumentenzuführungssystem sich in der zweiten, manuellen Dokumentenauflagebetriebsart befindet, so daß keines der Sauglöcher dem Kopieren in der Abbildungsstation ausgesetzt ist.

11. Vorrichtung nach Anspruch 10, bei der die Riemenpaßlageeinrichtung eine zweite und unterschiedliche Halteposition für den Riemen aufweist, wenn das Dokumentenzuführsystem sich in der ersten Kopierbetriebsart befindet, in der Dokumente durch Bewegung des Saugriemens zur Ablichtungsstation transportiert werden, welche zweite Halteposition des Riemens so ist, daß ein Lochbereich des Riemens über der Ablichtungsstation liegt.

12. Vorrichtung nach Anspruch 10 oder 11, bei der die Riemenpaßlageeinrichtung den Riemen in Umfangsrichtung von der ersten Halteposition in die zweite Halteposition automatisch in Abhängigkeit von der Änderung der Betriebsart des Dokumentenzuführsystems auk der ersten in die zweite Kopierbetriebsart weiterbewegt.

13. Vorrichtung nach einem der Ansprüche 10 bis 12, bei der der Ablichtungsstation eine Kopierplatte enthält und bei der die Abmessungen des lochlosen Flächenbereichs des Saugriemens größer als die Abmessungen der Platte sind.

14. Vorrichtung nach einem der Ansprüche 10 bis 13, bei der die Riemenpaßlageeinrichtung einen Sensor (52) enthält, der dem Riemen zugeordnet ist, um die Umfangslage in bezug auf ihren lochlosen Flächenbereich zu ermitteln.

15. Vorrichtung nach Anspruch 14, bei der die Riemenpaßlageeinrichtung ständige Markierungen (50) längs wenigstens einem Rand des Riemens an vorbestimmten Positionen des Riemens, die sich außerhalb der Ablichtungsstation erstrecken, enthält.

16. Vorrichtung nach Anspruch 1, bei der wenigstens zwei diskrete Flächenbereiche (38) (67), die ein Muster kleinerer Sauglöcher tragen, in Umfangsrichtung längs der Oberfläche des Riemens in Bewegungsrichtung des Riemens einen Abstand aufweisen, wobei der Riemen im Zwischenraum zwischen den Sauglochbereichen lochfrei (39) ist,

jeder der genannten Sauglochbereiche eine kleinere Fläche als das kleinste vom Riementransport zu transportierende Dokument ist;

und Einrichtungen (30) enthält, um ein Dokument in einer Ladestation (26) auf den Riemen passend aufzulegen, daß es einen der Sauglochbereiche des Riemens vollständig abdeckt; und

Einrichtungen (14, 16, 50, 52) zum Fortbewegen des Lochbereiches des Riemens von genannter Ladestation zur Ablichtungsstation des Kopiergeräts vorgesehen sind;

der Abstand zwischen den Sauglochbereichen ausreichend groß ist, daß keiner der anderen Sauglochbereiche dem Kopieren ausgesetzt ist, wenn jener eine Sauglochbereich sich in genannter Ablichtungsstation befindet.

17. Vorrichtung nach Anspruch 16, bei der die Einrichtung zum passenden Auflegen eines Dokumentes, den einen Sauglochbereich überdeckend eine Sensoreinrichtung (52) enthält, um die Umfangslage des Riemens in bezug auf genannte Sauglochbereiche zu ermitteln, der die Dokumentenauflegeinrichtung so steuert, daß das Dokument auf den Riemen in Übereinstimmung mit der ermittelten Position des Riemens aufgelegt wird.

18. Vorrichtung nach Anspruch 17, bei der die Sensoreinrichtung permanente Markierungsindizes (50) an vorbestimmten Positionen längs wenigstens eines Randes des Riemens aufweist, die sich außerhalb der Ablichtungsstation erstrecken.

19. Vorrichtung nach den Ansprüchen 16, 17 oder 18, bei der der Riemen endlos ist und die Sauglochbereiche längs des Riemens um eine Distanz beabstandet angeordnet sind, die der Riemendistanz zwischen der Ladestation und der Abbildungsstation entspricht, so daß ein Lochbereich sich in der Dokumentenladestation befindet, während der benachbarte Lochbereich längs des Riemens sich in der Abbildungsstation befindet.

20. Vorrichtung nach einem der Ansprüche 16 bis 19, bei der die Riemenoberfläche gleichmäßig lichtreflektierend und optisch durchgehend gleichförmig für das Kopiergerät in den Zwischenräumen (39) zwischen den Sauglochbereichen ist.

21. Vorrichtung nach Anspruch 20, bei der der Riemen Rillen enthält, die sich ohne Löcher von den Lochbereichen leicht bis in die löcherlosen Bereiche erstrecken, wobei die Rillen optische Eigenschaften aufweisen, die denen der optisch gleichförmigen Oberfläche gleichen.

22. Vorrichtung nach Anspruch 1, bei der die Löcher sich auf der ersten Seite des Riemens nur in kleineren, im Abstand angeordneten, diskreten begrenzten ersten Oberflächenbereichen (67) (68) (69) des Riemens öffnen, welche erste Riemenoberflächenbereiche eine erste gewellte Oberflächenkonfiguration haben, die die Dokumente im wesentlichen im Abstand zu den Sauglöchern hält und eine im wesentlichen uneingeschränkte (geringer Widerstand) Übertragung der Luftströmung unter den Dokumenten von den Löchern über die genannten ersten Oberflächenbereiche bewirkt,

die genannten ersten Oberflächenbereiche der Riemenoberfläche im wesentlichen durch schmale Randbereiche eingeschlossen sind, die undurchlöcherte pneumatische Staueinrichtungen (71, 71a, 71b) (72, 72a, 72b) enthalten,

wobei genannte Staubereiche eine zweite und sehr viel feiner gewellte Oberflächenkonfiguration aufweisen, als die ersten Oberflächenbereiche,

die Staubereiche eine Luftströmung unter einem Dokument hindurch vorsehen, die jedoch einen wesentlich höheren Strömungswiderstand hat, als an den ersten Oberflächenbereichen, um eine wesentliche Einschränkung der Saugwirkung unter dem Dokument gegenüber den Sauglöchern in den ersten Bereichen hervorzurufen, und

die Staubereiche an der Riemenoberfläche an Positionen angeordnet sind, die den Rändern eines Dokuments üblicher Größe entsprechen und so gestaltet sind, daß sie Lichtreflexionseigenschaften aufweisen, die im allgemeinen dem Übrigen der lichtreflektierenden Dokumentenablichtungsoberfläche des Riemens entsprechen, um die Ablichtung des Dokuments gegen den Riemen zu verbessern.

23. Vorrichtung nach Anspruch 22, bei der die Staubereiche in Mehrzahl in Abstand zueinander in aufeinanderfolgenden Bändern auf wenigstens zwei orthogonalen Seiten eines jeden ersten Oberflächenbereiches des Riemens in Randpositionen vorgesehen sind, die den Rändern von zunehmend größeren Standardformaten von Dokumenten entsprechen, um alternative unten liegende Staubereiche für die Ränder alternativer Dokumentenstandardformate anzugeben, und wobei die Oberfläche des Riemens zwischen den beabstandeten Staubereichen ähnlich zu den ersten Oberflächenbereichen gestaltet ist, um einen niedrigen Luftströmungswiderstand über die Bereiche der Riemenoberfläche zwischen den beabstandeten Staubereichen unter einem Dokument zu erzeugen.

24. Vorrichtung nach den Ansprüchen 22 oder 23, bei der die Sauglöcher in dem Riemen nur in einem am meisten mittig liegenden Abschnitt (67) des ersten Bereiches des Riemens vorgesehen sind, um von dem kleinsten auf dem Riemen zu transportierenden Dokument abgedeckt zu werden, welcher Abschnitt innerhalb aller genannter Staubereiche liegt.

25. Vorrichtung nach den Ansprüchen 22, 23 oder 24, bei der die Staubereiche aus schmalen Bändern von Oberflächenwellen in der Dokumentenablichtungsfläche des Riemens mit einer Tiefe bestehen, die ein Mehrfaches kleiner ist, als die Tiefe der Oberflächenwellen in den ersten Oberflächenbereichen des Riemens und wesentlich kleiner als 1 mm sind.

26. Vorrichtung nach Anspruch 1, bei der die Gasströmungskanäle flache Rillen (36) sind, die sehr schlank sind und sich im wesentlichen linear über die Dokumentenablichtungsfläche quer zur Bewegungsrichtung des Riemens erstrecken, um die Luftströmung von den Löchern längs der lochfreien Bereiche der Rillen unter einem Dokument zu leiten, und

die querverlaufenden Saugrillen in dichtem Abstand zu wenigstens einem Bereich der Dokumentenablichtungsfläche sind, aber pneumatisch voneinander durch ungerillte Dokumentenablichtungsflächenbereiche des Riemens dazwischen isoliert sind, so daß die einzelnen Querrillen mit ihren entsprechenden Sauglöchern unabhängig arbeitende Saugbereiche quer unter einer abdeckenden Dokumentenfläche bilden,

wobei diese Rillen ausreichend flach und in der Querschnittsfläche im Vergleich zu den Öffnungen der Sauglöcher darin eingeschränkt sind, um einen hohen pneumatischen Widerstand zu erzeugen, der die Luftströmung durch eine Rille unter einer daraufliegenden Dokumentenfläche zu den Sauglöchern der genannten Rille einschränkt.

27. Vorrichtung nach Anspruch 26, bei der die Breite der Rillen mehrfach größer als die Tiefe der Rillen ist und die Rillen Tiefen haben, die geringer als ungefähr 1 mm sind.

28. Vorrichtung nach den Ansprüchen 26 oder 27, bei der die minimale Gesamtfläche der Öffnungen der Sauglöcher in einer Rille mehrfach größer als die minimale Querschnittsfläche der Rille ist, in die diese Löcher münden, so daß der Druckabfall der Luftströmung längs dieser Rillen unter einem Dokument anstelle in den Sauglöchern auftritt.

29. Vorrichtung nach den Ansprüchen 26, 27 oder 28, bei der die Gesamtöffnungsfläche der Sauglöcher in einem Bereich einer Rille bis zu ungefähr fünf- bis sechsmal größer als das Zweifache der Querschnittsfläche desselben Bereiches dieser einen Rille ist.

30. Vorrichtung nach einem der Ansprüche 26 bis 29, bei der die Rillen Tiefen von im wesentlichen weniger als 1 mm aufweisen.

31. Vorrichtung nach einem der Ansprüche 26 bis 30, bei der wenigstens eine der Querrillen eine Vielzahl von pneumatisch verbindenden Längsrillenfortsätzen in der sich in Umfangsrichtung erstreckenden Richtung des Riemens aufweist, um bei der Unterdruckanziehung des Randes eines Dokuments zu helfen.

32. Vorrichtung nach einem der Ansprüche 26 bis 31, bei der keine Oberfläche der Rillen um mehr als 20° im Winkel gegen die Dokumentenablichtungsfläche des Riemens geneigt ist und daß alle lochlosen Bereiche davon optisch glatt kontinuierlich sind, um wirksam unsichtbar für die Belichtungsstation des Kopiergeräts zu sein.

33. Vorrichtung nach einem der Ansprüche 26 bis 32, bei der die Rillen sanfte Wellen in der Belichtungsoberfläche des Riemens sind, die für ein Kopiergerät optisch unsichtbar sind, mit Rillentiefen von wesentlich weniger als ungefähr 1 mm, und wobei die Rillen linear sind und einen im wesentlichen gleichförmigen Querschnitt aufweisen und die Breite der Rillen mehrfach größer als die Tiefe der Rillen ist.

34. Vorrichtung nach einem der Ansprüche 26 bis 33, bei der die Sauglöcher in dem Riemen auf Flächenbereiche zwischen schmalen und im Abstand angeordneten Umfangsbändern längs der Bewegungsrichtung des Riemens beschränkt sind.

35. Vorrichtung nach Anspruch 34, bei der genannte Löcherbänder quer im Abstand zueinander auf dem Riemen längs der Querrillen angeordnet sind, wobei ein erster Satz mehrerer Löcher von einem genannten Band in einem Teil einer Rille und wenigstens ein anderer Satz von Löchern eines anderen genannten Bandes im Abstand dazu längs derselben Rille von genannter erster Gruppe angeordnet ist.

36. Vorrichtung nach den Ansprüchen 34 oder 35, bei der genannte zwei Löcherbänder einen Abstand zueinander haben, der geringer als die Querabmessungen des kleinsten aud dem Riemen abzulichtenden Dokumentes ist, um unter entgegengesetzten Endbereichen desselben zu liegen.

37. Vorrichtung nach Anspruch 1, bei der die Dokumente gegen die erste Seite des Riemens von einer Luftströmung angezogen werden, die von Sauglöchern (42) (46) in einer lichtreflektierenden Oberfläche (20) (47) (62) einer Leitung (18) auf der Rückseite des Riemens zugeführt wird, welche Saugwirkung von den Leitungslöchern (42) (46) durch genannte weitere Löcher (40) (69) in dem Riemen übertragen wird, die sich auf die erste Seite des Riemens öffnen,

die Leitungsoberfläche auf genannter Rückseite des Riemens langgestreckte Rillen (43) (48) (63) hat, die in der Leitungsoberfläche leicht vertieft sind,

die Leitungsoberflächenrillen sich in Bewegungsrichtung des Riemens im Abstand quer zur Bewegungsrichtung des Riemens erstrecken und relativ schmal im Vergleich zur Gesamtbreite des Riemens sind,

die Sauglöcher in der Leitungsoberfläche sich vertieft innerhalb der Rillen in der Leitungsoberfläche öffnen;

die Riemenlöcher in schmalen Löcherbändern sind, die ähnlich im Querabstand und ähnlich in Bewegungsrichtung des Riemens verlaufen, um im wesentlichen über den Rillen in der Leitungsoberfläche zu liegen,

die Leitungsoberflächenrillen eine ausreichend große Querschnittsfläche aufweisen, um eine relativ unbehinderte Luftströmung aus den Leitungsoberflächenlöchern längs der Rillen unter dem Riemen zu den Riemenlöchern zu ermöglichen.

38. Vorrichtung nach Anspruch 37, bei der die Leistungsrillen lichtreflektierende Bodenflächen (44) (49) aufweisen, die in dichtem Abstand unter der Rückseite des Riemens verlaufen, und bei der die Sauglochöffnungen in der Leitungsoberfläche so angeordnet sind, daß wenigstens die meisten von ihnen nicht ausgerichtet und quer im Abstand zu den Löchern in dem Riemen sind, damit sie nicht unter den Riemenlöchern liegen, so daß die meisten der Riemenlöcher dicht über der lichtreflektierenden Bodenfläche der Rillen liegen, um eine lichtreflektierende Oberfläche für die Dokumentenbeleuchtung in der Belichtungsstation zu ergeben, um die Belichtung von Riemenlöchern zu verringern, die in der Belichtungsstation freiliegen.

39. Vorrichtung nach den Ansprüchen 37 oder 38, bei der die Sauglöcher in der Leitungsoberfläche nur in begrenzten kleineren Längen jener Rillen angeordnet sind, die unter einem Teil der Belichtungsstation liegen und die dem beschränkten Flächenbereich des Riemens entsprechen, der von dem kleinsten Dokument, das von dem Saugriemen zu der Belichtungsstation zu bewegen ist, abgedeckt ist, und bei der die lochlosen größeren Längen der Rillen mit der Luftströmung von dem beschränkten Lochbereich der Leitungsoberfläche auf eine wesentliche Distanz unter dem Riemen in Richtung der Dokumentenbewegung zu anderen der Sauglöcher im Riemen in Verbindung stehen, die im wesentlichen außerhalb des begrenzten Bereiches liegen, so daß allen anderen Riemenlöchern außerhalb des genannten beschränkten Lochbereiches der Rillen eine dichte, vollständig lochfreie lichtreflektierende Bodenfläche (44) (49) der genannten Rillen dicht unterliegt.

40. Vorrichtung nach den Ansprüchen 37, 38 oder 39, bei der die Leitungsflächenaußenseite der Rillen darin eine pneumatische Dichtung längs der Ränder der Rillen gegen die Rückseite des Riemens erzeugt, um den Sauganwendungsbereich auf nur die kleineren Bereiche der Rückseite des Riemens zu beschränken, die den Rillenbereichen entsprechen, um die Reibung zwischen der Rückseite des Riemens und der Leitungsoberfläche zu verringern.

41. Vorrichtung nach einem der Ansprüche 37 bis 40, bei der die Abstände zwischen den Sauglöchern in der Leitungsoberfläche und die Abstände zwischen der Sauglöchern im Riemen nicht ganzzahlig teilbare unterschiedliche Abstände sind, um eine verringerte Koinzidenz von Übereinstimmungen von Leitungsoberflächenlöchern mit Riemenlöchern während der Bewegung des Riemens zu bewirken.

42. Vorrichtung nach einem der Ansprüche 37 bis 41, bei der die Rillen in der Leitungsoberfläche wesentlich breiter sind, als die entsprechenden darüberliegenden Sauglochbänder in dem Riemen, und bei der die Sauglöcher in der Leitungsoberfläche gegen die Außenränder der Rillen in Positionen angeordnet sind, die nicht unter einer der Riemenlöcher liegen.

43. Vorrichtung nach einem der Ansprüche 37 bis 42, bei der der Riemen auf der ersten Seite des Riemens Rillen aufweist, die mit Löchern in dem Riemen in Verbindung stehen, und bei der die Rillen in dem Riemen sich quer zur Richtung der Rillen in der Leitungsoberfläche erstrecken.

FIG. I

52
18
10
12
50
22
14
16
23
20
26
30
24
37
35
33
32
28
31
34

TIMING
CONTROL

M

FIG. 3

38
37
36
23
36d
39
36a
36b
40
12
43
18
20
44
42

**FIG. 2**

FIG. 4

FIG. 5

FIG. 8

FIG. 7

FIG. 6

0 032 446